# EUROPEAN PATENT SPECIFICATION

(11) **EP 3 782 886 B1**
(45) Date of publication and mention of the grant of the patent: **13.10.2021**
(21) Application number: 20174910.8
(22) Date of filing: 15.05.2020
(51) Int. Cl.: B62J 6/05, B62J 17/02

(54) **STRADDLED VEHICLE**
GRÄTSCHSITZFAHRZEUG
VÉHICULE À ENFOURCHER

(30) Priority: 21.08.2019 JP 2019150941
(43) Date of publication of application: 24.02.2021
(73) Proprietor: YAMAHA HATSUDOKI KABUSHIKI KAISHA, Iwata-shi Shizuoka 438-8501 (JP)
(72) Inventor: CHIEN, I-Lun, 320 Taoyuan City (TW); TSAI, Cheng-Ting, 320 Taoyuan City (TW)
(74) Representative: Grünecker Patent- und Rechtsanwälte PartG mbB

(56) References cited:
- EP-A1- 2 641 822
- JP-A- 2002 206 466
- JP-A- 2005 239 004
- TW-A- 201 033 064

## Description

The present invention relates to a straddled vehicle.

A straddled vehicle described in JP 2005-239004 A, which shows the preamble of claim 1, includes a head pipe (14), a front fork (15) and a front wheel (WF). The front fork (15) is supported by the head pipe (14) so as to be turnable. The front wheel (WF) is supported by the front fork (15). The front fork (15) and the front wheel (WF) are turned when a rider operates a handle (16, 16).

Here, the handle (16, 16), except for grip portions (16a), is approximately entirely covered with a handle cover (1). Besides, brake levers are attached to the both ends of the handle (16, 16). On the other hand, brake wires (brake hoses) are also covered with the handle cover (1).

Furthermore, the motorcycle described in JP 2005-239004 A includes a headlamp (2) and right and left blinkers (3, 3), i.e., flashers. The headlamp (2) and the right and left blinkers (3, 3) are disposed in the handle cover (1). The headlamp (2) includes a bulb (2b) as a light source and a headlamp lens (2a). The headlamp lens (2a), having translucency, is disposed in front of the bulb (2b). Each of the right and left blinkers (3, 3) has a bulb (3b, 3b) as a light source and a blinker lens (3a, 3a). The blinker lens (3a, 3a), having translucency, is disposed in front of the bulb (3b, 3b).

Moreover, a conducting wire (2d) for electric conduction, i.e., a flasher harness, is connected to the bulb (2b) of the headlamp (2) through a socket (2c). Another conducting wire (3d) for electric conduction, i.e., a flasher harness, is connected to the bulb (3b) of each blinker (3) through a socket (3c). The conducting wires (2d, 3d) are covered with the handle cover (1).

The handle cover (1) is provided with an enlarged portion (1a2) in a middle portion (1a1) of the handle cover. The enlarged portion (1a2) bulges forward. The enlarged portion (1a2) is provided with an opening (1a3). The headlamp lens (2a) of the headlamp (2) is assembled to the handle cover (1), while being exposed through the opening (1a3). The handle cover (1) includes extending portions (1a4, 1a4) that extend right and left from the middle portion (1a1). The extending portions (1a4, 1a4) are provided with openings (1a5, 1a5), respectively. The blinker lenses (3b, 3b) of the right and left blinkers (3, 3) are assembled to the handle cover (1), while being exposed through the openings (1a5, 1a5), respectively. In other words, the headlamp (2) and the right and left blinkers (3, 3) are integrally assembled to the handle cover (1).

Albeit the right and left flashers, disposed in the handle cover, have had sufficient visibility so far, it may have been thought about further enhancing the visibility of the right and left flashers disposed in the handle cover. It may have been thought about enhancing the visibility of the right and left flashers by making the right and left flashers as stand out as possible. Specifically, it may have been thought about enhancing the visibility of the right and left flashers by enlarging the right and left flashers. In the motorcycle described in JP 2005-239004 A, the headlamp (2), having a large size, is disposed in the handle cover (1), whereby little space is left in the handle cover (1). Therefore, limitations have been imposed on enlarging the right and left flashers (3, 3). In view of this, it may have been thought about disposing the headlamp not in the head cover but in the front cover. An empty space is produced in the handle cover by disposing the headlamp in the front cover. This makes it easy to enlarge the right and left flashers disposed in the handle cover.

For example, EP 2644484 B1 discloses a headlamp (40) and right and left flashers (70, 70). The headlamp (40) is disposed in a front cover (30), whereas the right and left flashers (70, 70), each having a large size, are disposed in a handle cover. The handle cover includes a middle handle cover, a left handle cover and a right handle cover. The middle handle cover is disposed in the middle of the handle cover in a vehicle width direction. The left handle cover extends laterally leftward from the middle handle cover. The right handle cover extends laterally rightward from the middle handle cover. The left flasher is integrally assembled to the left handle cover. The right flasher is integrally assembled to the right handle cover. By thus disposing the headlamp in the front cover, it is made easy to enlarge the flashers disposed in the handle cover. In other words, it is made easy to enhance the visibility of the flashers.

It is a conventional idea that as described above, the flashers, disposed in the handle cover, are enlarged by disposing the headlamp in the front cover so as to enhance the visibility of the flashers.

However, it may have been noticed a task. The task is to reliably achieve comfortableness of a rider even when the flashers and the handle cover are enlarged. When the flashers are enlarged, a structure for supporting the flashers is enlarged in accordance. Hence, the handle cover is likely to be enlarged as well. The handle cover and the flashers are turned in conjunction with a handle operation of the rider. Hence, chances are that enlarging the handle cover and the flashers brings about degradation in comfortableness of the handle operation by the rider.

Additionally, in EP 2644484 B1, a variety of components, including braking devices such as brake wires (hoses) and attachments for brake levers, a throttle wire, a handlebar, and so forth, are disposed in the interior of the handle cover. Because of this, when the flashers are enlarged, an empty space is reduced in the interior of the handle cover. This possibly makes difficult the layout of the respective members.

It may have been thought about further enhancing comfortableness of the rider in addition to reliably achieving the visibility of the flashers. It may have been hit upon an idea of enhancing the visibility of the flashers by breaking away from the conventional idea.

It may have been focused on a phenomenon that light emitted from the flashers reflects on the front cover. When the headlamp is disposed in the handle cover, a large amount of light emitted from the headlamp is reflected in the front cover. Therefore, the light emitted from the flashers, albeit reflected in the front cover as well, does not stand out so much. It may have been noticed that the light emitted from the flashers, reflecting on the front cover, more stands out than in the aforementioned structure by disposing the headlamp in the front cover located below the handle cover. In other words, it may have been hit upon an idea of reliably achieving the visibility of the right and left flashers without enlarging the right and left flashers by making the light emitted from the right and left flashers as likely as possible to reflect on the front cover and by utilizing the reflected light.

Specifically, the idea is that the headlamp is disposed in the front cover, whereas the right and left flashers are disposed outside the handle cover. As seen in a vehicle plan view, the right and left flashers are disposed to overlap the upper end portion of the front cover. As seen in a vehicle back-and-forth direction, the handle cover is not disposed directly below a region between the front end and the rear end of the right/left flasher. Thus, it may have been hit upon an idea of making the light emitted from the right and left flashers as likely as possible to be reflected in the front cover by disposing the right and left flashers outside the handle cover so as not to block downward transmission of the light emitted from the right and left flashers as much as possible.

Besides, it may have been further examined the idea of disposing the flashers outside the handle cover. The flashers blink to inform surrounding vehicles and people of a turning direction of the motorcycle. For informing the turning direction, the right and left flashers separate from each other to some extent in the right-and-left direction. In consideration of this, it may have been thought about an idea of disposing the flashers outside the handle cover by protruding the flashers forward from the positions thereof described in, for instance, EP 2644484 B1. In other words, it may have been thought about an idea of making the left flasher compact in size, and simultaneously, disposing the left flasher outside the left handle cover while the left flasher is supported by the left end of the left handle cover. Likewise, it may have been thought about an idea of making the right flasher compact in size, and simultaneously, disposing the right flasher outside the right handle cover while the right flasher is supported by the right end of the right handle cover. It may have been expected that the empty space is increased in the interior of the handle cover by disposing the flashers outside the handle cover, whereby it is made easy to dispose components (the handle member, the braking devices, etc.) in the interior of the handle cover.

However, it may have been faced a task. The task is layout of the flasher harnesses. The flasher harnesses are disposed along the handle member. When the right and left flashers are supported by the right and left ends of the handle cover, the flasher harnesses are elongated right and left in the vehicle width direction. Additionally, the braking devices, each including a brake wire (line) and a brake lever, are disposed along the handle member as well. Because of this, it is required to devise how to dispose the flasher harnesses without interference with those members.

It may have been reexamined the structure that the headlamp is disposed in the front cover. It may have been herein noticed that the headlamp is not disposed in the middle portion of the handle cover, and hence, the middle portion of the handle cover has flexibility in space and shape to some extent. It may have been hit upon an idea of utilizing the middle portion of the handle cover so as to achieve good layout for the right and left flasher harnesses.

Specifically, the idea is that a protruding cover portion is formed in the middle handle cover. The protruding cover portion protrudes forward than the right and left handle covers. The left flasher is attached to a left lateral portion of the protruding cover portion, and extends laterally leftward. The left flasher harness is connected to the left flasher, while running through the left lateral portion of the protruding cover portion. The right flasher is attached to a right lateral portion of the protruding cover portion, and extends laterally rightward. The right flasher harness is connected to the right flasher, while running through the right lateral portion of the protruding cover portion. With the configuration herein described, the right and left flashers are reliably disposed at a large interval in the vehicle width direction. Besides, the right and left flasher harnesses become unlikely to interfere with the handle member and the right and left braking devices in the back-and-forth direction. Accordingly, performance in handling of the flasher harnesses is enhanced.

It is an object of the present invention to provide a straddled vehicle that can reliably achieve comfortableness of a rider by reliably achieving visibility of right and left flashers without enlarging the right and left flashers, and simultaneously, enhance performance in handling of right and left flasher harnesses in a straddled vehicle. According to the present invention said object is solved by a straddled vehicle having the features of independent claim 1. Preferred embodiments are laid down in the dependent claims.

A straddled vehicle according to an aspect of the present teaching includes a vehicle body frame, a steering device, a handle cover member, a left braking device, a right braking device, a left flasher, a left flasher harness, a right flasher, a right flasher harness, a front cover and a headlamp. The vehicle body frame includes a head pipe disposed in a middle of the straddled vehicle in a vehicle width direction. The steering device includes a front fork, a front wheel and a handle member. The front fork is supported by the head pipe so as to be turnable. The front wheel is supported by the front fork. The handle member extends in the vehicle width direction, and is operable by a rider so as to turn the front wheel. The handle cover member is disposed behind and in front of the handle member, and extends in the vehicle width direction. The handle cover member is turned together with the steering device. The left braking device is attached to a left lateral portion of the handle member. The left braking device is disposed at least in portion inside the handle cover member. The right braking device is attached to a right lateral portion of the handle member. The right braking device is disposed at least in portion inside the handle cover member. The left flasher is attached to the handle cover member. The left flasher includes a left light source and a left flasher cover. The left flasher cover, having translucency, is disposed in front of the left light source. The left flasher harness is disposed at least in portion inside the handle cover member. The left flasher harness electrifies the left flasher. The right flasher is attached to the handle cover member. The right flasher includes a right light source and a right flasher cover. The right flasher cover, having translucency, is disposed in front of the right light source. The right flasher harness is disposed at least in portion inside the handle cover member. The right flasher harness electrifies the right flasher. The front cover is disposed in front of the head pipe and below the handle cover member. The front cover is fixed to the vehicle body frame. The headlamp is disposed in the front cover.

The handle cover member includes a middle handle cover, a left handle cover and a right handle cover. The middle handle cover is disposed in the middle of the straddled vehicle in the vehicle width direction. The left handle cover extends laterally leftward from the middle handle cover. The right handle cover extends laterally rightward from the middle handle cover. The headlamp is disposed below an upper edge of the front cover. The right and left flashers overlap an upper end portion of the front cover as seen in a vehicle plan view. Both the handle member and the left braking device are disposed in portion inside the left handle cover. Both the handle member and the right braking device are disposed in portion inside the right handle cover. The middle handle cover includes a protruding cover portion. The protruding cover portion protrudes forward than the left handle cover and the right handle cover. The left handle cover is not located directly below a region between a rear end of the left flasher and a front end of the left flasher in a vehicle back-and-forth direction. The left flasher is attached to a left lateral portion of the protruding cover portion. The left flasher extends laterally leftward from the left lateral portion of the protruding cover portion. The left flasher harness is connected to the left flasher while running through the left lateral portion of the protruding cover portion. The right handle cover is not located directly below a region between a rear end of the right flasher and a front end of the right flasher in the vehicle back-and-forth direction. The right flasher is attached to a right lateral portion of the protruding cover portion. The right flasher extends laterally rightward from the right lateral portion of the protruding cover portion. The right flasher harness is connected to the right flasher while running through the right lateral portion of the protruding cover portion.

In the straddled vehicle according to the present aspect, light emitted from the left flasher reaches the front cover without being blocked by the left handle cover. Light emitted from the right flasher reaches the front cover without being blocked by the right handle cover. Therefore, the light emitted from the left flasher and that emitted from the right flasher are likely to reflect on the front cover. Accordingly, the flashers are enhanced in visibility without being enlarged. Additionally, the right and left flashers extend from the protruding cover portion laterally rightward and leftward, respectively. Because of this, the interval between the right and left flashers is reliably made large in the vehicle width direction. Moreover, the right and left flasher harnesses are connected to the right and left flashers, while running through the right and left lateral portions of the protruding cover portion, respectively. Therefore, the right and left flasher harnesses are disposed forwardly away from the handle member and the right and left braking devices. Because of this, the right and left flasher harnesses are unlikely to interfere with the handle member and the right and left braking devices in the back-and-forth direction. Accordingly, performance in handling of the flasher harnesses is enhanced.

An outer end of the right flasher and an outer end of the left flasher may be located inside right and left outer ends of the front cover in the vehicle width direction. In this case, the light emitted from the right flasher and that emitted from the left flasher are likely to be reflected in the front cover.

A front end of the left flasher may be located forward of a front edge of the left handle cover. A front end of the right flasher may be located forward of a front edge of the right handle cover. In this case, the light emitted from the right flasher and that emitted from the left flasher are likely to be reflected in the front cover.

Both the left flasher and the right flasher may overlap at least in portion the handle cover member as seen in a vehicle front view. In this case, the right and left flashers and the handle cover member can be compactly disposed.

Both the left flasher and the right flasher may entirely overlap the handle cover member as seen in the vehicle front view. In this case, the right and left flashers and the handle cover member can be compactly disposed.

The front edge of the left handle cover may be located forward of the rear end of the left flasher. The front edge of the right handle cover may be located forward of the rear end of the right flasher. In this case, the light emitted from each flasher is likely to reflect on not only the front cover but also the handle cover member. Accordingly, each flasher is enhanced in visibility.

The left flasher cover may be disposed forwardly away from the left handle cover. The right flasher cover may be disposed forwardly away from the right handle cover. In this case, the right and left flashers are enhanced in visibility.

The left handle cover may include a left recessed portion located behind the left flasher. The left recessed portion may be recessed backward. The left recessed portion may overlap the left flasher as seen in the vehicle front view. The right handle cover may include a right recessed portion located behind the right flasher. The right recessed portion may be recessed backward. The right recessed portion may overlap the right flasher as seen in the vehicle front view. In this case, the right and left flashers are disposed in adjacent to the right and left handle covers, whereby the straddled vehicle can be made compact in size.

The left lateral portion of the protruding cover portion may include a left attachment portion. The left attachment portion may include a left hole opened leftward. The left flasher may be attached to the left attachment portion. The left flasher harness may be inserted through the left hole. The right lateral portion of the protruding cover portion may include a right attachment portion. The right attachment portion may include a right hole opened rightward. The right flasher may be attached to the right attachment portion. The right flasher harness may be inserted through the right hole. In this case, handling of the flasher harnesses is made easy.

The left flasher harness may include a first portion. The first portion may extend from the left flasher in the vehicle width direction, and may be located inside the handle cover. The right flasher harness may include a second portion. The second portion may extend from the right flasher in the vehicle width direction, and may be located inside the handle cover member. The first and second portions may be located forward of the handle member. In this case, the right and left flasher harnesses are unlikely to interfere with the handle member and the right and left braking devices. Accordingly, handling of the right and left flasher harnesses is made easy.

The straddled vehicle may be a scooter-type vehicle.

Overall, in the straddled vehicle according to the present teaching, it is possible to reliably achieve comfortableness of a rider by reliably achieving visibility of the right and left flashers without enlarging the right and left flashers, and simultaneously, enhance performance in handling of the right and left flasher harnesses.

### BRIEF DESCRIPTION OF THE DRAWINGS

FIG. 1 is a side view of a straddled vehicle according to a preferred embodiment.
FIG. 2 is a front view of the straddled vehicle.
FIG. 3 is a side view a handle cover member and the surroundings thereof.
FIG. 4 is a front view of the handle cover member and the surroundings thereof.
FIG. 5 is a top view of the handle cover member and the surroundings thereof.
FIG. 6 is a front view of a configuration of a handle member and the surroundings thereof.
FIG. 7 is a top view of the configuration of the handle member and the surroundings thereof.
FIG. 8 is an enlarged view of a left braking device.
FIG. 9 is an exploded view of the handle cover member.
FIG. 10 is a cross-sectional view of FIG. 2 taken along line X-X.
FIG. 11 is a cross-sectional view of FIG. 4 taken along line XI-XI.
FIG. 12 is a cross-sectional view of FIG. 4 taken along line XII-XII.
FIG. 13 is a front view of the straddled vehicle in lighting up a left flasher.
FIG. 14 is a left side view of the straddled vehicle in lighting up the left flasher.
FIG. 15 is an enlarged left side view of the straddled vehicle in lighting up the left flasher.
FIG. 16 is a front view of the straddled vehicle in lighting up a right flasher.
FIG. 17 is a right side view of the straddled vehicle in lighting up the right flasher.
FIG. 18 is an enlarged right side view of the straddled vehicle in lighting up the right flasher.

### DETAILED DESCRIPTION OF EMBODIMENTS

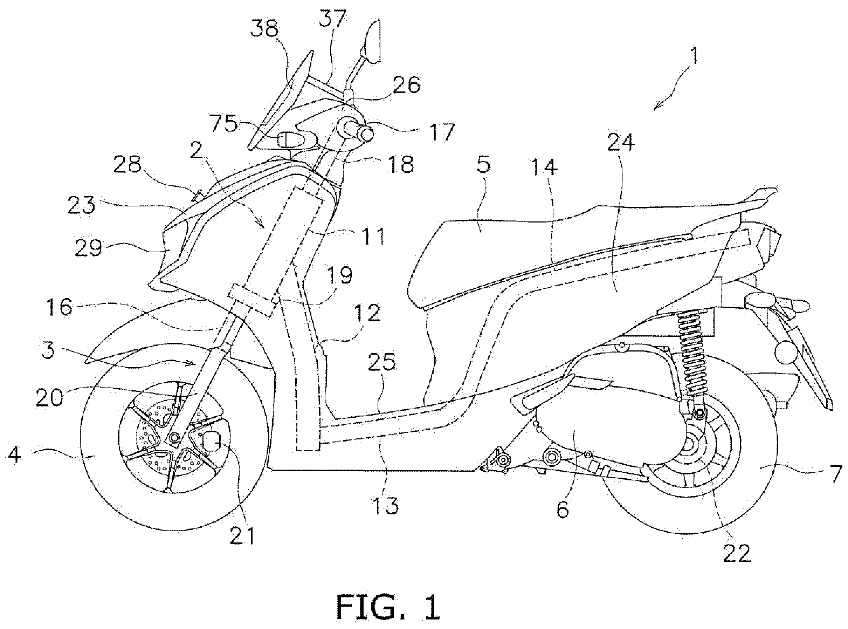

A straddled vehicle according to a preferred embodiment will be hereinafter explained with reference to drawings. FIG. 1 is a side view of a straddled vehicle 1 according to the preferred embodiment. The straddled vehicle 1 according to the present preferred embodiment is a scooter-type vehicle. The straddled vehicle 1 includes a vehicle body frame 2, a steering device 3, a front wheel 4, a seat 5, a power unit 6 and a rear wheel 7. It should be noted that in the following explanation, front, rear, right and left directions are defined as indicating front, rear, right and left directions seen from a rider seated on the seat 5.

The vehicle body frame 2 includes a head pipe 11, a down frame 12, a lower frame 13 and a rear frame 14. The head pipe 11 is disposed in the middle of the vehicle in a vehicle width direction. The head pipe 11 extends forward and downward. The down frame 12 extends downward from the head pipe 11. The lower frame 13 extends backward from a lower portion of the down frame 12. The rear frame 14 extends backward and upward from a rear portion of the down frame 12.

The steering device 3 is supported by the head pipe 11 so as to be turnable. The steering device 3 supports the front wheel 4 such that the front wheel 4 is rotatable. The steering device 3 includes a front fork 16 and a handle member 17. The front fork 16 is supported by the head pipe 11 so as to be turnable. The front wheel 4 is rotatably supported by the front fork 16. The handle member 17 can be operated by the rider in order to turn the front wheel 4. The handle member 17 extends in the vehicle width direction.

The front fork 16 includes a steering shaft 18, a bracket 19, a left suspension 20 and a right suspension 20 (not shown in the drawings). The steering shaft 18 is inserted into the head pipe 11. The bracket 19 is connected to the steering shaft 18 and the right and left suspensions 20. The right and left suspensions 20 support the front wheel 4 such that the front wheel 4 is rotatable.

The seat 5 is disposed behind the head pipe 11. The seat 5 is disposed above the rear frame 14. The power unit 6 is disposed below the seat 5. The power unit 6 includes, for instance, an internal combustion engine. Alternatively, the power unit 6 may include an electric motor. The rear wheel 7 is rotatably supported by the power unit 6.

The straddled vehicle 1 includes a front brake 21 and a rear brake 22. The front brake 21 is attached to the front wheel 4. The front brake 21 generates a braking force acting on the front wheel 4. The front brake 21 is, for instance, a disc brake. The rear brake 22 is attached to the rear wheel 7. The rear brake 22 generates a braking force acting on the rear wheel 7. The rear brake 22 is, for instance, a drum brake.

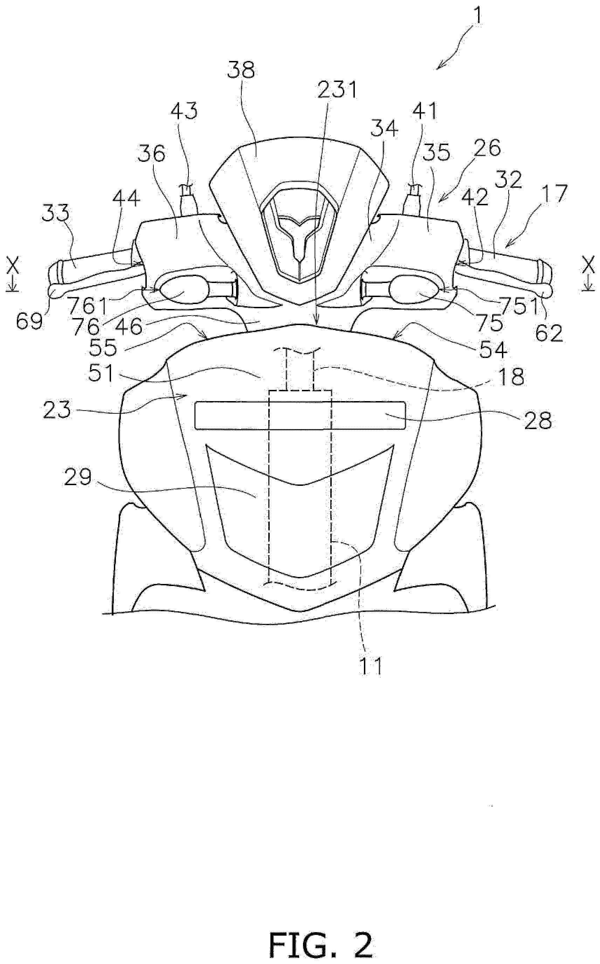

The straddled vehicle 1 includes a front cover 23, a rear cover 24, a footboard 25 and a handle cover member 26. The front cover 23 is fixed to the vehicle body frame 2. The front cover 23 is disposed in front of the head pipe 11, while being disposed below the handle cover member 26. FIG. 2 is a front view of the straddled vehicle 1. As shown in FIG. 2, the front cover 23 overlaps the head pipe 11 as seen in a vehicle front view. The front cover 23 includes a portion 28 to which a license plate is attached. A headlamp 29 is disposed in the front cover 23. The headlamp 29 is disposed below an upper edge 231 of the front cover 23 as seen in the vehicle front view.

As shown in FIG. 1, the rear cover 24 is disposed below the seat 5. The rear cover 24 covers the rear frame 14 from lateral sides. The footboard 25 is disposed between the front cover 23 and the rear cover 24. The footboard 25 is disposed below and in front of the seat 5. The footboard 25 is a portion on which the rider of the straddled vehicle 1 puts his/her feet. The footboard 25 has a flat shape. Alternatively, the footboard 25 may include a center tunnel portion protruding upward.

The handle cover member 26 covers portion of the handle member 17. The handle cover member 26 is located above the front cover 23. The handle cover member 26 is located above the head pipe 11. The handle cover member 26 is turnable together with the handle member 17 with respect to the front cover 23.

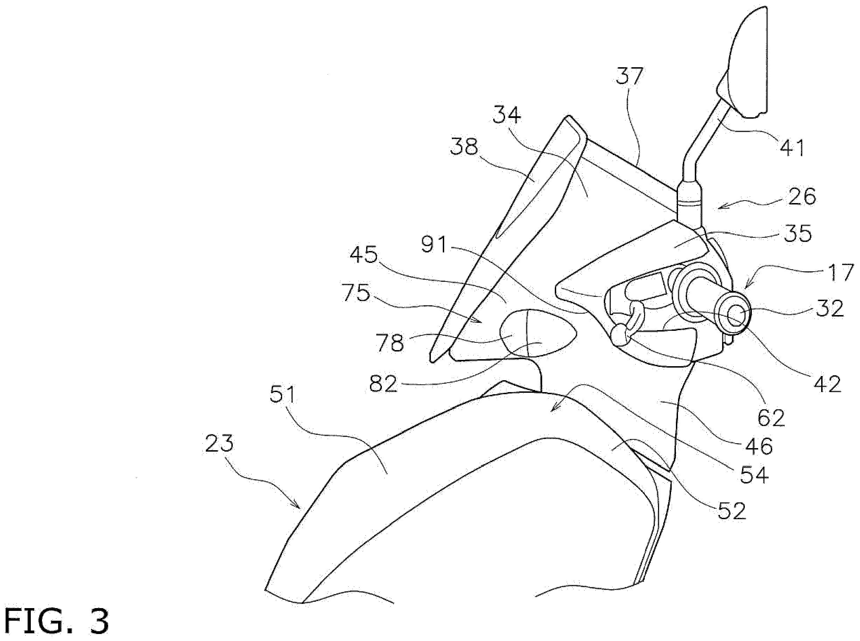

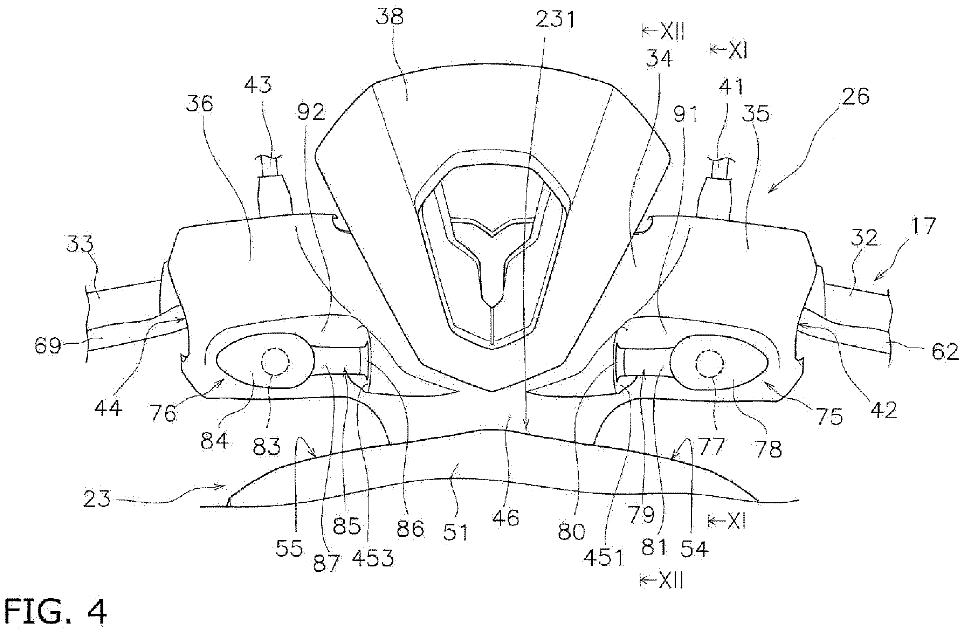

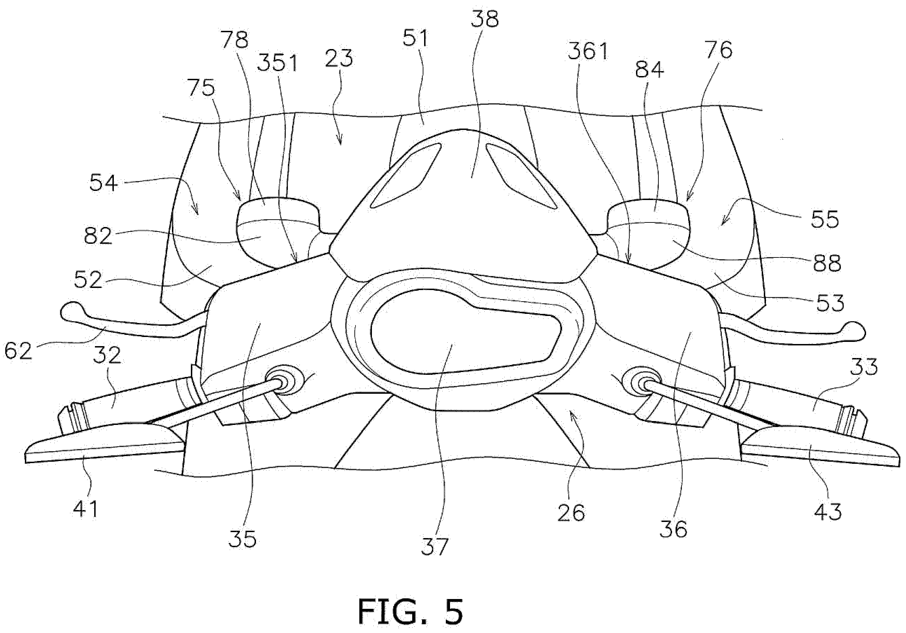

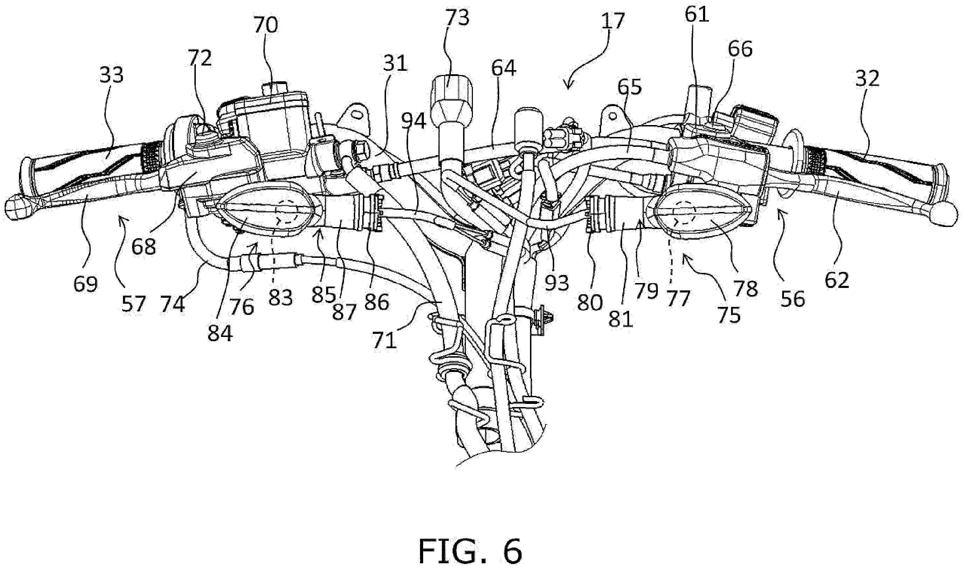

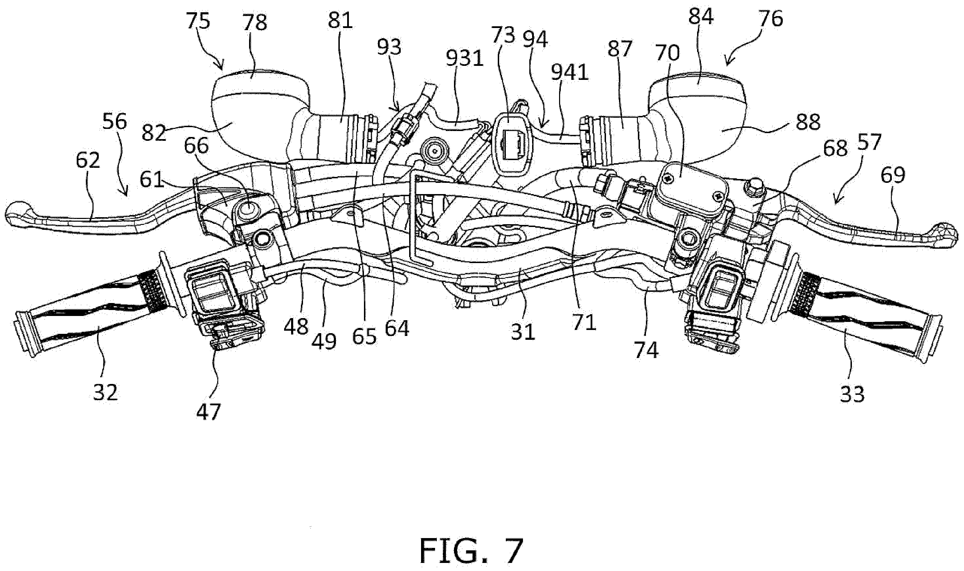

FIG. 3 is a side view of the handle cover member 26 and the surroundings thereof. FIG. 4 is a front view of the handle cover member 26 and the surroundings thereof. FIG. 5 is a top view of the handle cover member 26 and the surroundings thereof. FIG. 6 is a front view of a configuration of the handle member 17 and the surroundings thereof. FIG. 7 is a top view of the configuration of the handle member 17 and the surroundings thereof. FIGS. 6 and 7 omit illustration of the handle cover member 26.

As shown in FIGS. 3 to 5, the handle cover member 26 covers portion of the handle member 17. As shown in FIGS. 6 and 7, the handle member 17 includes a handlebar 31, a left grip 32 and a right grip 33. The handlebar 31 is connected to an upper portion of the front fork 16. The left grip 32 is connected to the left end of the handlebar 31. The right grip 33 is connected to the right end of the handlebar 31.

The handle cover member 26 is disposed behind and in front of the handle member 17. The handle cover member 26 is disposed above and below the handle member 17. The handle cover member 26 extends in the vehicle width direction. The handle cover member 26 is supported by the handle member 17. The handle cover member 26 is turned together with the steering device 3 when the handle member 17 is operated by the rider.

The handle cover member 26 includes a middle handle cover 34, a left handle cover 35 and a right handle cover 36. The middle handle cover 34 is disposed in the middle of the vehicle in the vehicle width direction. The steering shaft 18 is disposed inside the middle handle cover 34. A meter unit 37 and a screen 38 are attached to the middle handle cover 34. The meter unit 37 includes, for instance, a speedmeter. The meter unit 37 is disposed on the upper surface of the middle handle cover 34. The screen 38 has translucency. The screen 38 is disposed in front of the meter unit 37.

The left handle cover 35 extends laterally leftward from the middle handle cover 34. A left mirror 41 is disposed on the left handle cover 35. The left handle cover 35 includes a left opening 42. The left opening 42 is provided in a lateral surface of the left handle cover 35. The left opening 42 is opened leftward. The handlebar 31 runs through the left opening 42. The left grip 32 is disposed on the left of the left handle cover 35.

The right handle cover 36 extends laterally rightward from the middle handle cover 34. A right mirror 43 is disposed on the right handle cover 36. The right handle cover 36 includes a right opening 44. The right opening 44 is provided in a lateral surface of the right handle cover 36. The right opening 44 is opened rightward. The handlebar 31 runs through the right opening 44. The right grip 33 is disposed on the right of the right handle cover 36.

The middle handle cover 34 includes a protruding cover portion 45. The protruding cover portion 45 protrudes forward than the left handle cover 35 and the right handle cover 36. The protruding cover portion 45 is located directly above the front cover 23. As seen in a vehicle top view, the protruding cover portion 45 overlaps the front cover 23. The middle handle cover 34 includes a neck portion 46. The neck portion 46 protrudes downward than the left handle cover 35 and the right handle cover 36. The neck portion 46 is disposed directly above the front cover 23.

The straddled vehicle 1 includes a left flasher 75 and a right flasher 76. The left flasher 75 is attached to a left lateral portion of the protruding cover portion 45. The right flasher 76 is attached to a right lateral portion of the protruding cover portion 45. The left flasher 75 and the right flasher 76 will be explained below in detail.

The front cover 23 includes a front surface 51, a left upper surface 52, a right upper surface 53, a left top portion 54 and a right top portion 55. The front surface 51 is disposed in front of the head pipe 11. As seen in a vehicle side view, the front surface 51 slants forward and downward. The headlamp 29 is disposed in the front surface 51. The left upper surface 52 and the right upper surface 53 are disposed behind the front surface 51. As seen in the vehicle side view, the left upper surface 52 and the right upper surface 53 slant backward and downward. The left upper surface 52 is disposed on the left of the neck portion 46. The right upper surface 53 is disposed on the right of the neck portion 46. The left top portion 54 is located between the front surface 51 and the left upper surface 52. The right top portion 55 is located between the front surface 51 and the right upper surface 53.

As shown in FIGS. 6 and 7, the straddled vehicle 1 includes a left braking device 56 and a right braking device 57. The left braking device 56 is attached to a left lateral portion of the handle member 17. The left braking device 56 is disposed at least in portion inside the handle cover member 26. The right braking device 57 is attached to a right lateral portion of the handle member 17. The right braking device 57 is disposed at least in portion inside the handle cover member 26. The left braking device 56 and the right braking device 57 are attached to the handlebar 31.

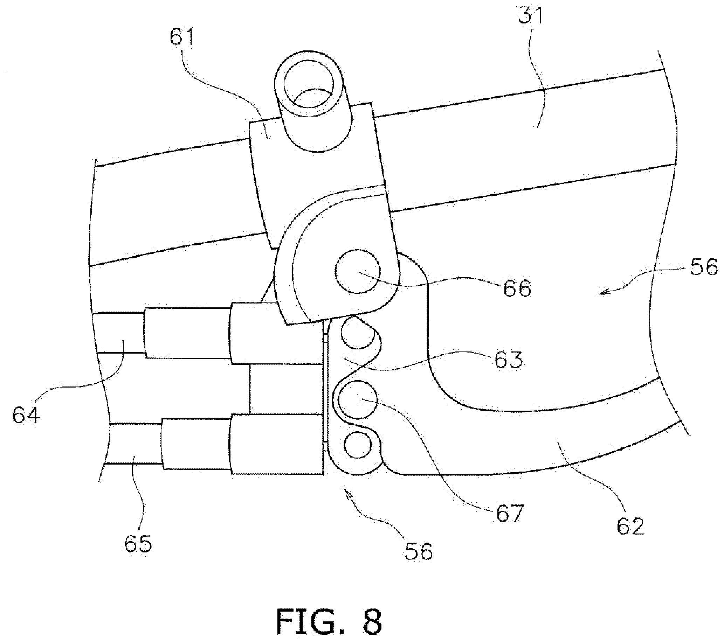

FIG. 8 is an enlarged view of the left braking device 56. As shown in FIG. 8, the left braking device 56 includes a left holder 61, a left brake lever 62, an equalizer 63, a coupling cable 64 and a rear brake cable 65. The left holder 61 is attached to the handlebar 31. The left brake lever 62 is supported by the left holder 61, while being turnable about a left lever shaft 66. The equalizer 63 is supported by the left brake lever 62, while being turnable about a rotational shaft 67.

The coupling cable 64 and the rear brake cable 65 are connected to the left brake lever 62 through the equalizer 63. The equalizer 63 distributes an operating force of the left brake lever 62 to the coupling cable 64 and the rear brake cable 65. The coupling cable 64 is connected to the right braking device 57. The rear brake cable 65 is connected to the rear brake 22. The coupling cable 64 and the rear brake cable 65 are pulled and pushed in accordance with a motion of the left brake lever 62.

As shown in FIGS. 6 and 7, the right braking device 57 includes a right holder 68, a right brake lever 69, a master cylinder 70 and a front brake hose 71. The right holder 68 is attached to the handlebar 31. The right brake lever 69 is supported by the right holder 68, while being turnable about a right lever shaft 72. The right brake lever 69 and the coupling cable 64 are connected to the master cylinder 70. The front brake hose 71 is connected to the master cylinder 70. The front brake hose 71 is a hose through which brake fluid flows. The master cylinder 70 pushes out the brake fluid to the front brake hose 71 in conjunction with the motion of the right brake lever 69. The front brake hose 71 is connected to the front brake 21. The hydraulic pressure of the brake fluid is transmitted to the front brake 21 through the front brake hose 71. Accordingly, the front brake 21 is actuated in conjunction with operating the right brake lever 69.

The master cylinder 70 pushes out the brake fluid to the front brake hose 71 in conjunction with the motion of the coupling cable 64. When the left brake lever 62 is operated, the operating force of the left brake lever 62 is distributed to the coupling cable 64 and the rear brake cable 65, whereby the coupling cable 64 and the rear brake cable 65 are actuated. Thus, the front brake 21 and the rear brake 22 are actuated in conjunction with operating the left brake lever 62.

As shown in FIG. 7, the coupling cable 64 is disposed between the left brake lever 62 and the right brake lever 69. The coupling cable 64 extends along the handlebar 31 in the vehicle width direction. The rear brake cable 65 extends from the left brake lever 62 along the handlebar 31 in the vehicle width direction. The front brake hose 71 extends from the right brake lever 69 along the handlebar 31 in the vehicle width direction. As shown in FIG. 6, the rear brake cable 65 extends along the steering shaft 18 in an up-and-down direction. The front brake hose 71 extends along the steering shaft 18 in the up-and-down direction.

The coupling cable 64, the rear brake cable 65 and the front brake hose 71 are disposed inside the handle cover member 26. The master cylinder 70 is disposed inside the handle cover member 26. Both of the left and right brake levers 62 and 69 are disposed in portion inside the handle cover member 26. The left brake lever 62 extends to the outside of the handle cover member 26, while running through the left opening 42 of the left handle cover 35. The right brake lever 69 extends to the outside of the handle cover member 26, while running through the right opening 44 of the right handle cover 36.

It should be noted that the straddled vehicle 1 includes a meter cable 73 and a throttle wire 74. The meter cable 73 and the throttle wire 74 are disposed inside the handle cover member 26. The meter cable 73 is connected to the meter unit 37. The meter cable 73 extends along the steering shaft 18 in the up-and-down direction. The throttle wire 74 is connected to the right grip 33. The throttle wire 74 is pulled and pushed in conjunction with the motion of the right grip 33. The throttle wire 74 extends from the right grip 33 toward the steering shaft 18.

As shown in FIG. 7, the straddled vehicle 1 includes a handle switch 47. The handle switch 47 is attached to the handlebar 31. The left and right flashers 75 and 76 are lit up in response to operating the handle switch 47 by the rider. Handle switch cables 48 and 49 are connected to the handle switch 47. The handle switch cables 48 and 49 extend along the handlebar 31 in the vehicle width direction.

Next, the left and right flashers 75 and 76 will be explained. The left flasher 75 includes a left light source 77, a left flasher cover 78 and a left flasher housing 79. The left light source 77 is, for instance, a bulb or an LED. The left flasher cover 78 is disposed in front of the left light source 77. The left flasher cover 78 has translucency. The left flasher cover 78 transmits therethrough light emitted from the left light source 77. The left light source 77 and the left flasher cover 78 are attached to the left flasher housing 79.

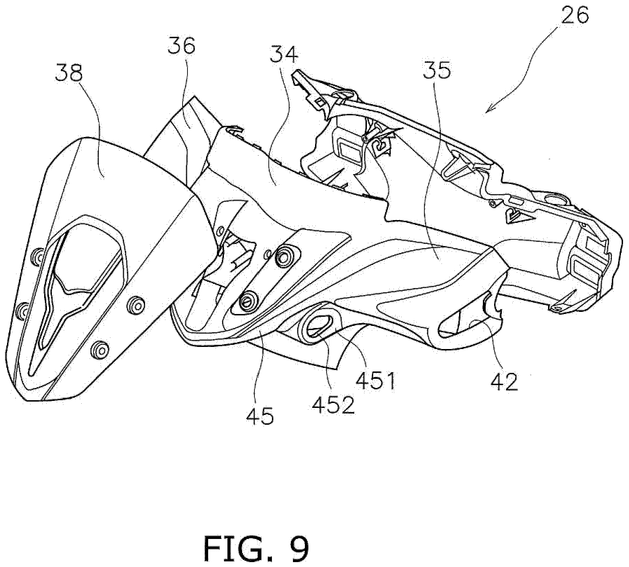

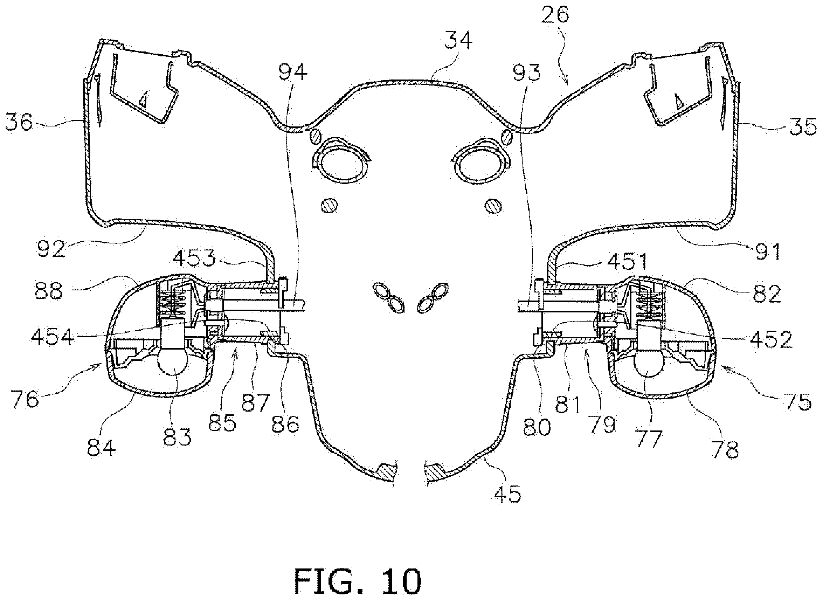

The left flasher housing 79 includes a left base end 80, a left extending portion 81 and a left body 82. As shown in FIG. 4, the left base end 80 is attached to the left lateral portion of the protruding cover portion 45. The left lateral portion of the protruding cover portion 45 includes a left attachment portion 451. FIG. 9 is an exploded view of the handle cover member 26. FIG. 10 is a cross-sectional view of FIG. 2 taken along line X-X. As shown in FIGS. 9 and 10, the left attachment portion 451 includes a left hole 452 opened leftward. The left base end 80 of the left flasher housing 79 is attached to the left attachment portion 451.

The left extending portion 81 extends leftward from the left base end 80. The left extending portion 81 is made in the shape of a rod. The left body 82 is located behind the left flasher cover 78. The left light source 77 and the left flasher cover 78 are attached to the left body 82. The left body 82 is larger than the left extending portion 81 in the up-and-down direction. The left flasher cover 78 is larger than the left extending portion 81 in the up-and-down direction.

The right flasher 76 is shaped bilaterally symmetric to the left flasher 75. The right flasher 76 includes a right light source 83, a right flasher cover 84 and a right flasher housing 85. The right light source 83, the right flasher cover 84 and the right flasher housing 85 are configured similarly to the left light source 77, the left flasher cover 78 and the left flasher housing 79, respectively. The right flasher housing 85 includes a right base end 86, a right extending portion 87 and a right body 88. The right base end 86, the right extending portion 87 and the right body 88 are configured similarly to the left base end 80, the left extending portion 81 and the left body 82, respectively. The right base end 86 is attached to the right lateral portion of the protruding cover portion 45. Detailedly, as shown in FIG. 4, the right lateral portion of the protruding cover portion 45 includes a right attachment portion 453. As shown in FIG. 10, the right attachment portion 453 includes a right hole 454 opened rightward. The right base end 86 of the right flasher housing 85 is attached to the right attachment portion 453.

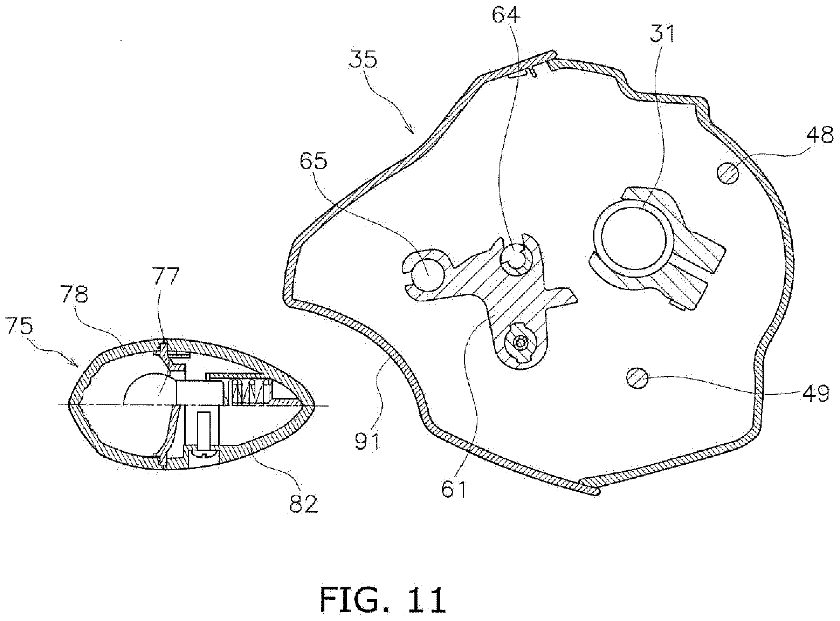

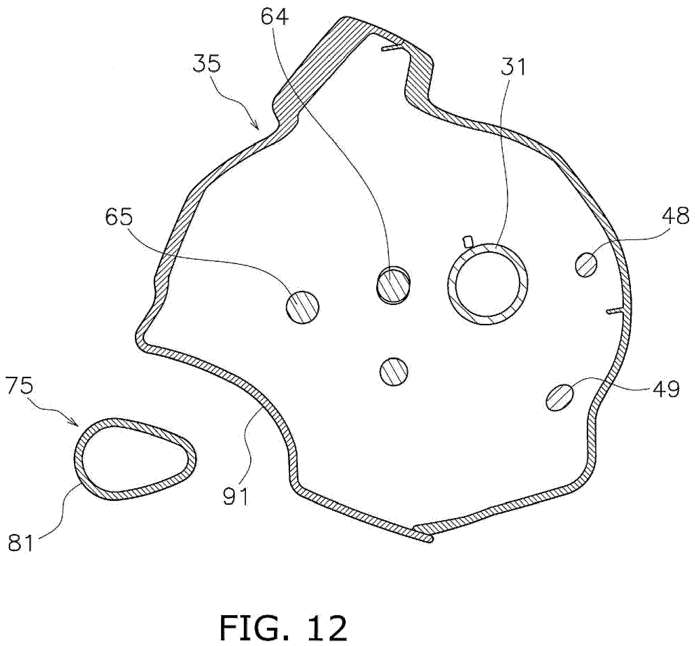

The left flasher cover 78 is disposed in front of the left handle cover 35. The left flasher cover 78 is disposed forwardly away from the left handle cover 35. The left flasher cover 78 overlaps the left handle cover 35 as seen in the vehicle front view. FIG. 11 is a cross-sectional view of FIG. 4 taken along line XI-XI. FIG. 12 is a cross-sectional view of FIG. 4 taken along line XII-XII. As shown in FIGS. 4, 10 and 11, the left handle cover 35 includes a left recessed portion 91. The left recessed portion 91 is disposed on the front surface of the left handle cover 35. The left recessed portion 91 has a shape curved to be recessed backward. The left recessed portion 91 is located behind the left flasher 75. The left flasher cover 78 overlaps the left recessed portion 91 as seen in the vehicle front view. The entirety of the left flasher cover 78 overlaps the left recessed portion 91 as seen in the vehicle front view. However, only portion of the left flasher cover 78 may overlap the left recessed portion 91 as seen in the vehicle front view. As shown in FIG. 3, the left recessed portion 91 extends to a position directly above the left flasher 75 as seen in the vehicle side view.

The right flasher cover 84 is disposed in front of the right handle cover 36. The right flasher cover 84 is disposed forwardly away from the right handle cover 36. The right flasher cover 84 overlaps the right handle cover 36 as seen in the vehicle front view. The right handle cover 36 includes a right recessed portion 92. The right recessed portion 92 is disposed on the front surface of the right handle cover 36. The right recessed portion 92 has a shape curved to be recessed backward. The right recessed portion 92 is located behind the right flasher 76. The right flasher cover 84 overlaps the right recessed portion 92 as seen in the vehicle front view. The entirety of the right flasher cover 84 overlaps the right recessed portion 92 as seen in the vehicle front view. However, only portion of the right flasher cover 84 may overlap the right recessed portion 92 as seen in the vehicle front view. The right recessed portion 92 extends to a position directly above the right flasher 76 as seen in a vehicle side view.

As shown in FIG. 2, an outer end 751 of the left flasher 75 and an outer end 761 of the right flasher 76 are located inside the left outer end and the right outer end of the front cover 23 in the vehicle width direction. Distance between the outer end 751 of the left flasher 75 and the outer end 761 of the right flasher 76 is smaller than the maximum width of the front cover 23 in the vehicle width direction. The outer end 751 of the left flasher 75 and the outer end 761 of the right flasher 76 are located inside the left outer end and the right outer end of the handle cover member 26 in the vehicle width direction. The distance between the outer end 751 of the left flasher 75 and the outer end 761 of the right flasher 76 is smaller than the maximum width of the handle cover member 26 in the vehicle width direction. The entirety of the left flasher 75 and that of the right flasher 76 overlap the handle cover member 26 in the vehicle front view.

As shown in FIG. 5, a front edge 351 of the left handle cover 35 is located forward of the rear end of the left flasher 75 as seen in a vehicle top view. The front end of the left flasher 75 is located forward of the front edge 351 of the left handle cover 35 as seen in the vehicle top view. The left flasher cover 78 is located forward of the left top portion 54 of the front cover 23. The left flasher cover 78 is located directly above the front surface 51 of the front cover 23.

The right flasher 76 is disposed bilaterally symmetric to the left flasher 75. A front edge 361 of the right handle cover 36 is located forward of the rear end of the right flasher 76 as seen in the vehicle top view. The front end of the right flasher 76 is located forward of the front edge 361 of the right handle cover 36 as seen in the vehicle top view. The right flasher cover 84 is located forward of the right top portion 55 of the front cover 23. The right flasher cover 84 is located directly above the front surface 51 of the front cover 23.

As shown in FIG. 5, the left flasher 75 and the right flasher 76 overlap an upper end portion of the front cover 23 as seen in the vehicle top view. The left flasher 75 overlaps the left top portion 54 of the front cover 23 as seen in the vehicle top view. The right flasher 76 overlaps the right top portion 55 of the front cover 23 as seen in the vehicle top view. The left flasher cover 78 is located forward of the left handle cover 35 as seen in the vehicle top view. The right flasher cover 84 is located forward of the right handle cover 36 as seen in the vehicle top view. The left and right flasher covers 78 and 84 overlap the front surface 51 of the front cover 23 as seen in the vehicle top view.

As shown in FIGS. 3 and 4, the left handle cover 35 is not located directly below a region between the front and rear ends of the left flasher 75 in a vehicle back-and-forth direction. A space is produced between the left flasher 75 and the front cover 23 in the up-and-down direction so as to enable passage of light emitted from the left light source 77. Therefore, the light emitted from the left light source 77 reaches the front cover 23 without being blocked by the left handle cover 35. The right handle cover 36 is not located directly below a region between the front and rear ends of the right flasher 76 in the vehicle back-and-forth direction. A space is produced between the right flasher 76 and the front cover 23 in the up-and-down direction so as to enable passage of light emitted from the right light source 83. Therefore, the light emitted from the right light source 83 reaches the front cover 23 without being blocked by the right handle cover 36.

As shown in FIGS. 6, 7 and 10, the straddled vehicle 1 includes a left flasher harness 93 and a right flasher harness 94. The left flasher harness 93 is connected to the left flasher 75. The right flasher harness 94 is connected to the right flasher 76. The left and right flasher harnesses 93 and 94 are connected to a battery (not shown in the drawings). The left flasher 75 is supplied with electric power from the battery through the left flasher harness 93. Accordingly, the left light source 77 is electrified and emits light. The right flasher 76 is supplied with electric power from the battery through the right flasher harness 94. Accordingly, the right light source 83 is electrified and emits light.

As shown in FIG. 10, the left flasher harness 93 is inserted through the left hole 452. The left flasher harness 93 is connected to the left flasher 75, while running through the left lateral portion of the protruding cover portion 45. The right flasher harness 94 is inserted through the right hole 454. The right flasher harness 94 is connected to the right flasher 76, while running through the right lateral portion of the protruding cover portion 45.

As shown in FIG. 7, the left flasher harness 93 includes a first portion 931. The first portion 931 extends from the left flasher 75 in the vehicle width direction. The right flasher harness 94 includes a second portion 941. The second portion 941 extends from the right flasher 76 in the vehicle width direction. The first and second portions 931 and 941 are disposed inside the handle cover member 26. The first and second portions 931 and 941 are located forward of the handle member 17.

The first and second portions 931 and 941 are located forward of the coupling cable 64. The first and second portions 931 and 941 are located forward of the front brake hose 71 inside the handle cover member 26. The first and second portions 931 and 941 are located forward of the rear brake cable 65 inside the handle cover member 26. The first and second portions 931 and 941 run in front of the meter cable 73 inside the handle cover member 26. The remaining portion of the left flasher harness 93 and that of the right flasher harness 94 are bundled with each other and extend in the up-and-down direction.

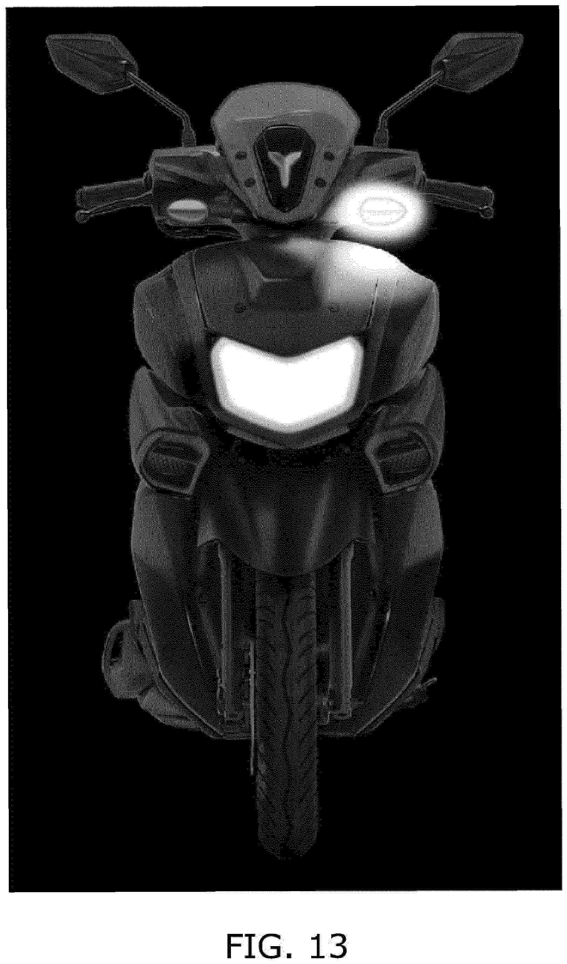

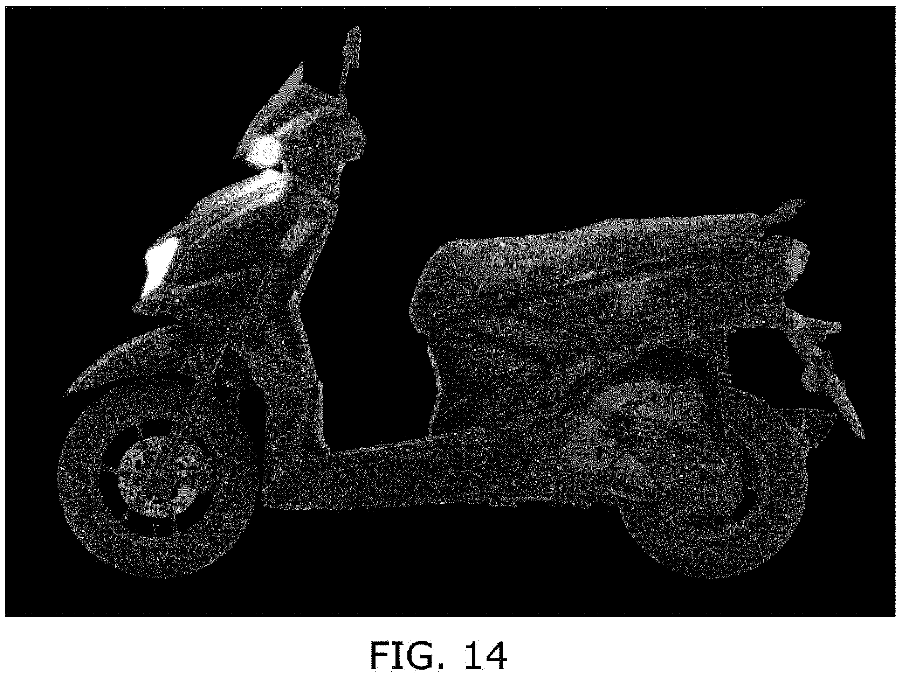

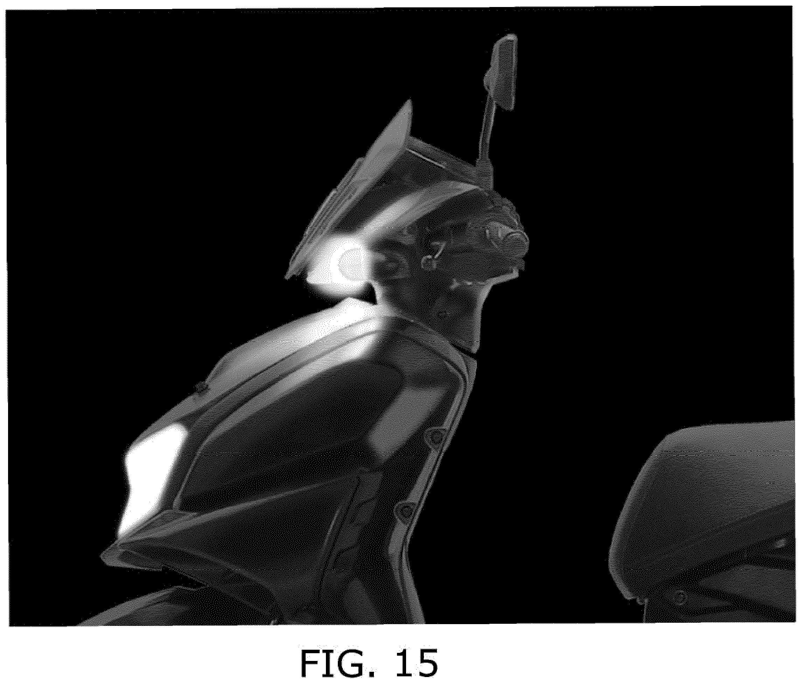

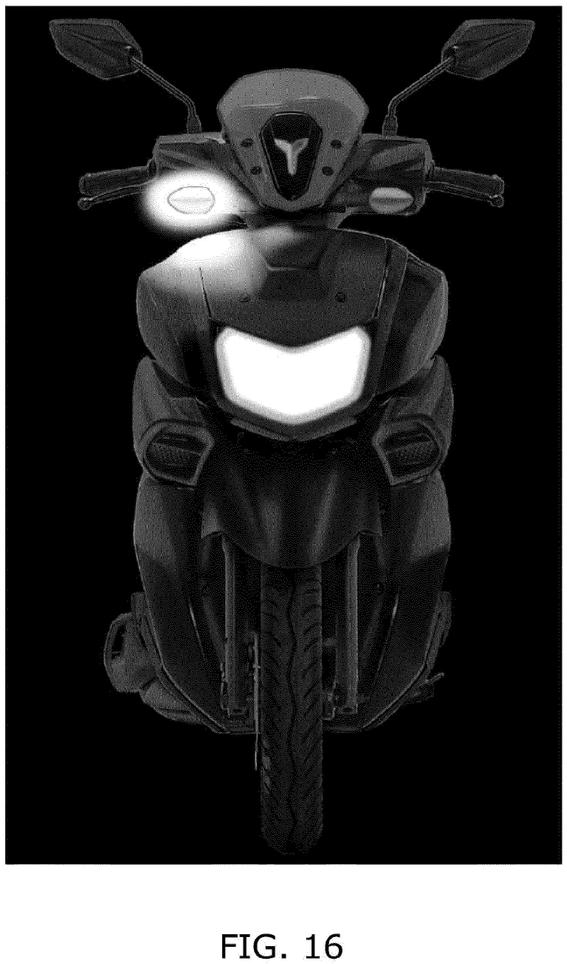

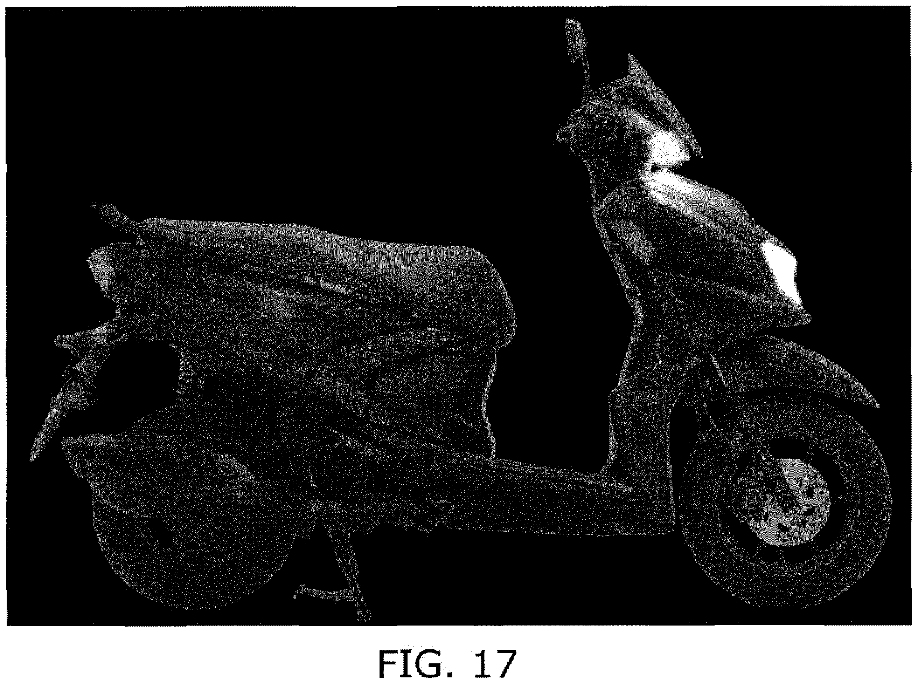

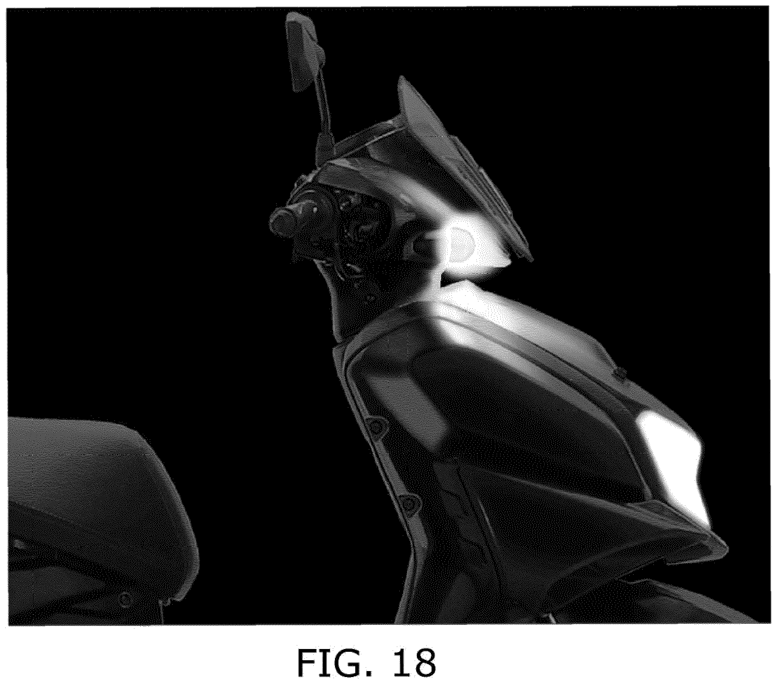

FIG. 13 is a front view of the straddled vehicle 1 in lighting up the left flasher 75. FIG. 14 is a left side view of the straddled vehicle 1 in lighting up the left flasher 75. FIG. 15 is an enlarged left side view of the straddled vehicle 1 in lighting up the left flasher 75. FIG. 16 is a front view of the straddled vehicle 1 in lighting up the right flasher 76. FIG. 17 is a right side view of the straddled vehicle 1 in lighting up the right flasher 76. FIG. 18 is an enlarged right side view of the straddled vehicle 1 in lighting up the right flasher 76.

As shown in FIGS. 13 to 15, in the straddled vehicle 1 according to the present preferred embodiment, the light emitted from the left flasher 75 reaches the front cover 23 without being blocked by the left handle cover 35. As shown in FIGS. 16 to 18, the light emitted from the right flasher 76 reaches the front cover 23 without being blocked by the right handle cover 36. Therefore, the light emitted from each of the left and right flashers 75 and 76 is likely to reflect on the front cover 23. Accordingly, the left and right flashers 75 and 76 can be enhanced in visibility without being enlarged. Besides, the left and right flashers 75 and 76 can be also made compact in size because of the enhanced visibility thereof.

Additionally, the left and right flashers 75 and 76 extend from the protruding cover portion 45 laterally leftward and rightward, respectively. Because of this, the interval between the left and right flashers 75 and 76 is reliably made large in the vehicle width direction. Moreover, the left and right flasher harnesses 93 and 94 are connected to the left and right flashers 75 and 76, while running through the left and right lateral portions of the protruding cover portion 45, respectively. Because of this, the left and right flasher harnesses 75 and 76 are unlikely to interfere with the handle member 17 and the left and right braking devices 56 and 57 in the back-and-forth direction. Accordingly, performance in handling of the flasher harnesses 93 and 94 is enhanced.

One preferred embodiment of the present teaching has been explained above. Within another preferred embodiment a variety of changes can be made without departing from the gist of the present teaching.

The front brake 21 may be another type of brake such as a drum brake. In this case, a front brake cable may be provided instead of the front brake hose 71, and may be connected to the front brake 21. The rear brake 22 may be another type of brake such as a disc brake. In this case, a rear brake hose may be provided instead of the rear brake cable 65, and may be connected to the rear brake 22 through a master cylinder.

In the aforementioned preferred embodiment, the left braking device 56 is a combined brake that actuates the front brake 21 and the rear brake 22 in a linked manner in conjunction with the motion of the left brake lever 62. However, the left braking device 56 is not limited to the combined brake. The left braking device 56 may actuate only the rear brake 22 in conjunction with the motion of the left brake lever 62.

### Industrial Applicability

In the straddled vehicle according to the present teaching, it is possible to reliably achieve comfortableness of a rider by reliably achieving visibility of right and left flashers without enlarging the right and left flashers, and simultaneously, enhance performance in handling of right and left flasher harnesses.

### Reference Signs List

2...Vehicle body frame, 3...Steering device, 4...Frontwheel, 11...Head pipe, 16...Front fork, 17...Handle member, 23...Front cover, 26...Handle cover member, 29...Headlamp, 34...Middle handle cover, 35...Left handle cover, 36...Right handle cover, 45...Protruding cover portion, 56...Left braking device, 57...Right braking device, 75...Left flasher, 76...Right flasher, 77...Left light source, 78...Left flasher cover, 83...Right light source, 84...Right flasher cover, 94...Right flasher harness, 91...Left recessed portion, 92...Right recessed portion, 93...Left flasher harness, 451...Left attachment portion, 452... Left hole, 453...Right attachment portion, 454...Right hole, 931...First portion, 941...Second portion

## Claims

1. A straddled vehicle (1) comprising:
a vehicle body frame (2) including a head pipe (11), the head pipe (11) is disposed in a middle of the straddled vehicle (1) in a vehicle width direction;
a steering device (3) including a front fork (16), a front wheel (4) and a handle member (17), the front fork (16) is supported by the head pipe (11) so as to be turnable, the front wheel (4) is supported by the front fork (16), the handle member (17) extends in the vehicle width direction, the handle member (17) is operable by a rider so as to turn the front wheel (4);
a handle cover member (26) disposed behind and in front of the handle member (17) in regards to a vehicle back-and-forth direction, the handle cover member (26) extends in the vehicle width direction, the handle cover member (26) is turnable together with the steering device (3);
a left braking device (56) attached to a left lateral portion of the handle member (17) in regards to the vehicle width direction, the left braking device (56) is disposed at least in portion inside the handle cover member (26);
a right braking device (57) attached to a right lateral portion of the handle member (17) in regards to the vehicle width direction, the right braking device (57) is disposed at least in portion inside the handle cover member (26);
a left flasher (75) attached to the handle cover member (26), the left flasher (75) includes a left light source (77) and a left flasher cover (78), the left flasher cover (78) has translucency, the left flasher (75) is disposed in front of the left light source (77) in regards to the vehicle back-and-forth direction;
a left flasher harness (93) for electrifying the left flasher (75), the left flasher harness (93) is disposed at least in portion inside the handle cover member (26);
a right flasher (76) attached to the handle cover member (26), the right flasher (76) includes a right light source (83) and a right flasher cover (84), the right flasher cover (84) has translucency, the right flasher cover (84) is disposed in front of the right light source (83) in regards to the vehicle back-and-forth direction;
a right flasher harness (94) for electrifying the right flasher (76), the right flasher harness (94) is disposed at least in portion inside the handle cover member (26);
a front cover (23) fixed to the vehicle body frame (2), the front cover (23) is disposed in front of the head pipe (11) in regards to the vehicle back-and-forth direction and below the handle cover member (26) in regards to a vehicle up-and-down direction; and
a headlamp (29) both the handle member (17) and the left braking device are disposed in portion inside a left handle cover, both the handle member (17) and the right braking device are disposed in portion inside a right handle cover;
**characterized by** the head lamp (29) being disposed in the front cover,
the handle cover member (26) includes
a middle handle cover (34) disposed in the middle of the straddled vehicle (1) in the vehicle width direction,
the left handle cover (35) extending laterally leftward from the middle handle cover (34) in regards to the vehicle width direction, and
the right handle cover (36) extending laterally rightward from the middle handle cover (34) in regards to the vehicle width direction,
the headlamp (29) is disposed below an upper edge of the front cover (23) in regards to the vehicle up-and-down direction,
the right and left flashers (76, 75) overlap an upper end portion of the front cover (23) as seen in a vehicle plan view,
both the handle member (17) and the left braking device (56) are disposed in portion inside the left handle cover (35),
both the handle member (17) and the right braking device (57) are disposed in portion inside the right handle cover (36),
the middle handle cover (34) includes a protruding cover portion (45), the protruding cover portion (45) is protruding further forward than the left handle cover (35) and the right handle cover (36) in regards to the vehicle back-and-forth direction,
in regards to the vehicle up-and-down direction the left handle cover (35) is not located directly below a region between a rear end of the left flasher (75) and a front end of the left flasher (75) in the vehicle back-and-forth direction,
the left flasher (75) is attached to a left lateral portion of the protruding cover portion (45),
the left flasher (75) extends laterally leftward from the left lateral portion of the protruding cover portion (45) in regards to the vehicle width direction,
the left flasher harness (93) is connected to the left flasher (75) while running through the left lateral portion of the protruding cover portion (45),
in regards to the vehicle up-and-down direction the right handle cover (36) is not located directly below a region between a rear end of the right flasher (76) and a front end of the right flasher (76) in the vehicle back-and-forth direction,
the right flasher (76) is attached to a right lateral portion of the protruding cover portion (45),
the right flasher (76) extends laterally rightward from the right lateral portion of the protruding cover portion (45) in regards to the vehicle width direction, and
the right flasher harness (94) is connected to the right flasher (76) while running through the right lateral portion of the protruding cover portion (45).

2. The straddled vehicle (1) according to claim 1, wherein an outer end of the right flasher (76) and an outer end of the left flasher (75) are located inside right and left outer ends of the front cover (23) in the vehicle width direction.

3. The straddled vehicle (1) according to claim 1 or 2, wherein a front end of the left flasher (75) is located forward of a front edge (351) of the left handle cover (35) in regards to the vehicle back-and-forth direction, and
a front end of the right flasher (76) is located forward of a front edge (361) of the right handle cover (36) in regards to the vehicle back-and-forth direction.

4. The straddled vehicle (1) according to any of claims 1 to 3, wherein both the left flasher (75) and the right flasher (76) overlap at least in portion the handle cover member (26) as seen in a vehicle front view.

5. The straddled vehicle (1) according to any of claims 1 to 4, wherein both the left flasher (75) and the right flasher (76) entirely overlap the handle cover member (26) as seen in the vehicle front view.

6. The straddled vehicle (1) according to any of claim 3, wherein the front edge (351) of the left handle cover (35) is located forward of the rear end of the left flasher (75) in regards to the vehicle back-and-forth direction, and the front edge (361) of the right handle cover (36) is located forward of the rear end of the right flasher (76) in regards to the vehicle back-and-forth direction.

7. The straddled vehicle (1) according to any of claims 1 to 6, wherein the left flasher cover (78) is disposed forwardly away from the left handle cover (35) in regards to the vehicle back-and-forth direction, and
the right flasher cover (84) is disposed forwardly away from the right handle cover (36) in regards to the vehicle back-and-forth direction.

8. The straddled vehicle (1) according to any of claims 1 to 7, wherein the left handle cover (35) includes a left recessed portion (91) recessed backward, the left recessed portion (91) is located behind the left flasher (75) in regards to the vehicle back-and-forth direction,
the left recessed portion (91) overlaps the left flasher (75) as seen in the vehicle front view,
the right handle cover (36) includes a right recessed portion (92) recessed backward, the right recessed portion (92) is located behind the right flasher (76) in regards to the vehicle back-and-forth direction, and
the right recessed portion (92) overlaps the right flasher (76) as seen in the vehicle front view.

9. The straddled vehicle (1) according to any of claims 1 to 8, wherein the left lateral portion of the protruding cover portion (45) includes a left attachment portion (451), the left attachment portion (451) includes a left hole (452) opened leftward in regards to the vehicle width direction,
the left flasher (75) is attached to the left attachment portion (451),
the left flasher harness (93) is inserted through the left hole (452),
the right lateral portion of the protruding cover portion (45) includes a right attachment portion (453), the right attachment portion (453) includes a right hole (454) opened rightward in regards to the vehicle width direction,
the right flasher (76) is attached to the right attachment portion (453), and
the right flasher harness (94) is inserted through the right hole (454).

10. The straddled vehicle (1) according to any of claims 1 to 9, wherein the left flasher harness (93) includes a first portion (931), the first portion (931) extends from the left flasher (75) in the vehicle width direction, the first portion (931) is located inside the handle cover member (26),
the right flasher harness (94) includes a second portion (941), the second portion (941) extends from the right flasher (76) in the vehicle width direction, the second portion (941) is located inside the handle cover member (26), and
the first and second portions (931, 941) are located forward of the handle member (17) in regards to the vehicle back-and-forth direction.

11. The straddled vehicle (1) according to any of claims 1 to 10, the straddled vehicle (1) being a scooter-type vehicle.

## Patentansprüche

1. Ein Spreiz-Sitz-Fahrzeug (1), das umfasst:
einen Fahrzeug-Körper-Rahmen (2), der ein Kopf-Rohr (11) beinhaltet, das Kopf-Rohr (11) ist in einer Mitte des Spreiz-Sitz-Fahrzeugs (1) in einer Fahrzeug-Breiten-Richtung angeordnet;
eine Lenk-Vorrichtung (3), die eine Vorder-Gabel (16), ein Vorder-Rad (4) und ein Griff-Element (17) beinhaltet, die Vorder-Gabel (16) ist durch das Kopf-Rohr (11) drehbar gelagert, das Vorder-Rad (4) ist durch die Vorder-Gabel (16) gelagert, das Griff-Element (17) erstreckt sich in der Fahrzeug-Breiten-Richtung, das Griff-Element (17) ist durch einen Fahrer betätigbar, um das Vorder-Rad (4) zu drehen;
ein Griff-Abdeckungs-Element (26), das hinter und vor dem Griff-Element (17), in Bezug auf eine Fahrzeug-Rück-und-Vorwärts-Richtung, angeordnet ist, das Griff-Abdeckungs-Element (26) erstreckt sich in der Fahrzeug-Breiten-Richtung, das Griff-Abdeckungs-Element (26) ist zusammen mit der Lenk-Vorrichtung (3) drehbar;
eine linke Brems-Vorrichtung (56), die an einem linken seitlichen Abschnitt des Griff-Elements (17), in Bezug auf die Fahrzeug-Breiten-Richtung, angebracht ist, die linke Brems-Vorrichtung (56) ist zumindest abschnittsweise innerhalb des Griff-Abdeckungs-Elements (26) angeordnet;
eine rechte Brems-Vorrichtung (57), die an einem rechten seitlichen Abschnitt des Griff-Elements (17), in Bezug auf die Fahrzeug-Breiten-Richtung, angebracht ist, die rechte Brems-Vorrichtung (57) ist zumindest abschnittsweise innerhalb des Griff-Abdeckungs-Elements (26) angeordnet;
einen linken Blinker (75), der an dem Griff-Abdeckungs-Element (26) angebracht ist, der linke Blinker (75) beinhaltet eine linke Licht-Quelle (77) und eine linke Blinker-Abdeckung (78), die linke Blinker-Abdeckung (78) hat Lichtdurchlässigkeit, der linke Blinker (75) ist vor der linken Licht-Quelle (77), in Bezug auf die Fahrzeug-Rück-und-Vorwärts-Richtung, angeordnet;
einen linken Blinker-Kabelbaum (93) zur Elektrifizierung des linken Blinkers (75), der linke Blinker-Kabelbaum (93) ist zumindest abschnittsweise innerhalb des Griff-Abdeckungs-Elements (26) angeordnet;
einen rechten Blinker (76), der an dem Griff-Abdeckungs-Element (26) angebracht ist, der rechte Blinker (76) beinhaltet eine rechte Licht-Quelle (83) und eine rechte Blinker-Abdeckung (84), die rechte Blinker-Abdeckung (84) hat Lichtdurchlässigkeit, die rechte Blinker-Abdeckung (84) ist vor der rechten Licht-Quelle (83), in Bezug auf die Fahrzeug-Rück-und-Vorwärts-Richtung, angeordnet;
einen rechten Blinker-Kabelbaum (94) zur Elektrifizierung des rechten Blinkers (76), der rechte Blinker-Kabelbaum (94) ist zumindest abschnittsweise innerhalb des Griff-Abdeckungs-Elements (26) angeordnet;
eine Front-Abdeckung (23), die am Fahrzeug-Körper-Rahmen (2) befestigt ist, die Front-Abdeckung (23) ist vor dem Kopf-Rohr (11), in Bezug auf die Fahrzeug-Rück-und-Vorwärts-Richtung, und unter dem Griff-Abdeckungs-Element (26), in Bezug auf eine Fahrzeug-Aufwärts-und-Abwärts-Richtung, angeordnet; und
einem Scheinwerfer (29), beide das Griff-Element (17) und die linke Brems-Vorrichtung sind abschnittsweis innerhalb einer linken Griff-Abdeckung angeordnet, beide das Griff-Element (17) und die rechte Brems-Vorrichtung sind abschnittsweis innerhalb einer rechten Griff-Abdeckung angeordnet
**gekennzeichnet durch** den Scheinwerfer (29), der in der Front-Abdeckung (23) angeordnet ist,
das Griff-Abdeckungs-Element (26) beinhaltet
eine mittlere Griff-Abdeckung (34), die in der Mitte des Spreiz-Sitz-Fahrzeugs (1) in Fahrzeug-Breiten-Richtung angeordnet ist,
die linke Griff-Abdeckung (35) erstreckt sich von der mittleren Griff-Abdeckung (34) in Bezug auf die Fahrzeug-Breiten-Richtung seitlich nach links, und
die rechte Griff-Abdeckung (36) erstreckt sich von der mittleren Griff-Abdeckung (34) in Bezug auf die Fahrzeug-Breiten-Richtung seitlich nach rechts,
der Scheinwerfer (29) ist in Bezug auf die Fahrzeug-Aufwärts-und-Abwärts-Richtung unterhalb einer Oberkante der Front-Abdeckung (23) angeordnet,
der rechte und der linke Blinker (76, 75) überlappen einen oberen Endabschnitt der Front-Abdeckung (23), wie in einer Fahrzeug-Draufsicht gesehen,
beide das Griff-Element (17) und die linke Brems-Vorrichtung (56) sind abschnittsweis innerhalb der linken Griff-Abdeckung (35) angeordnet,
beide das Griff-Element (17) und die rechte Brems-Vorrichtung (57) sind abschnittsweis innerhalb der rechten Griff-Abdeckung (36) angeordnet,
die mittlere Griff-Abdeckung (34) beinhaltet einen vorstehenden Abdeckungs-Abschnitt (45), der vorstehende Abdeckungs-Abschnitt (45) steht weiter nach vorne vor als die linke Griff-Abdeckung (35) und die rechte Griff-Abdeckung (36) in Bezug auf die Fahrzeug-Rück-und-Vorwärts-Richtung,
in Bezug auf die Fahrzeug-Aufwärts-und-Abwärts-Richtung ist die linke Griff-Abdeckung (35) nicht direkt unter einem Bereich zwischen einem hinteren Ende des linken Blinkers (75) und einem vorderen Ende des linken Blinkers (75) in Fahrzeug-Rück-und-Vorwärts-Richtung,
der linke Blinker (75) ist an einem linken seitlichen Abschnitt des vorstehenden Abdeckungs-Abschnitts (45) angebracht,
der linke Blinker (75) erstreckt sich vom linken seitlichen Abschnitt des vorstehenden Abdeckungs-Abschnitts (45) in Bezug auf die Fahrzeug-Breiten-Richtung seitlich nach links,
der linke Blinker-Kabelbaum (93) ist mit dem linken Blinker (75) verbunden, während er durch den linken seitlichen Teil des vorstehenden Abdeckungs-Abschnitts (45) verläuft,
in Bezug auf die Fahrzeug-Aufwärts-und-Abwärts-Richtung ist die rechte Griff-Abdeckung (36) nicht direkt unter einem Bereich zwischen einem hinteren Ende des rechten Blinkers (76) und einem vorderen Ende des rechten Blinkers (76) in der Fahrzeug-Rück-und-Vorwärts-Richtung,
der rechte Blinker (76) ist an einem rechten seitlichen Abschnitt des vorstehenden Abdeckungs-Abschnitts (45) angebracht,
der rechte Blinker (76) erstreckt sich vom rechten seitlichen Abschnitt des vorstehenden Abdeckungs-Abschnitts (45) in Bezug auf die Fahrzeug-Breiten-Richtung seitlich nach rechts, und
der rechte Blinker-Kabelbaum (94) ist mit dem rechten Blinker (76) verbunden, während er durch den rechten seitlichen Teil des vorstehenden Abdeckungs-Abschnitts (45) verläuft.

2. Das Spreiz-Sitz-Fahrzeug (1) gemäß Anspruch 1, wobei ein äußeres Ende des rechten Blinkers (76) und ein äußeres Ende des linken Blinkers (75) innerhalb des rechten und linken äußeren Endes der Front-Abdeckung (23) in Fahrzeug-Breiten-Richtung angeordnet sind.

3. Das Spreiz-Sitz-Fahrzeug (1) gemäß Anspruch 1 oder 2, wobei ein vorderes Ende des linken Blinkers (75) in Bezug auf die Fahrzeug-Rück-und-Vorwärts-Richtung vor einer Vorder-Kante (351) der linken Griff-Abdeckung (35) angeordnet ist, und
ein vorderes Ende des rechten Blinkers (76) in Bezug auf die Fahrzeug-Rück-und-Vorwärts-Richtung vor einer Vorder-Kante (361) der rechten Griff-Abdeckung (36) angeordnet ist.

4. Das Spreiz-Sitz-Fahrzeug (1) gemäß einem der Ansprüche 1 bis 3, wobei beide der linke Blinker (75) und der rechte Blinker (76) das Griff-Abdeckungs-Element (26) in einer Fahrzeug-Front-Ansicht gesehen zumindest abschnittsweise überlappen.

5. Das Spreiz-Sitz-Fahrzeug (1) gemäß einem der Ansprüche 1 bis 4, wobei beide der linke Blinker (75) und der rechte Blinker (76) das Griff-Abdeckungs-Element (26) in der Fahrzeug-Front-Ansicht gesehen vollständig überlappen.

6. Das Spreiz-Sitz-Fahrzeug (1) gemäß einem von Anspruch 3, wobei die Vorder-Kante (351) der linken Griff-Abdeckung (35) in Bezug auf die Fahrzeug-Rück-und-Vorwärts-Richtung vor dem hinteren Ende des linken Blinkers (75) angeordnet ist, und
die Vorder-Kante (361) der rechten Griff-Abdeckung (36) in Bezug auf die Fahrzeug-Rück-und-Vorwärts-Richtung vor dem hinteren Ende des rechten Blinkers (76) angeordnet ist.

7. Das Spreiz-Sitz-Fahrzeug (1) gemäß einem der Ansprüche 1 bis 6, wobei die linke Blinker-Abdeckung (78) in Bezug auf die Fahrzeug-Rück-und-Vorwärts-Richtung nach vorne von der linken Griff-Abdeckung (35) weg angeordnet ist, und
die rechte Blinker-Abdeckung (84) in Bezug auf die Fahrzeug-Rück-und-Vorwärts-Richtung nach vorne von der rechten Griff-Abdeckung (36) weg angeordnet ist.

8. Das Spreiz-Sitz-Fahrzeug (1) gemäß einem der Ansprüche 1 bis 7, wobei die linke Griff-Abdeckung (35) einen nach hinten ausgesparten linken Aussparungs-Abschnitt (91) beinhaltet, der linke Aussparungs-Abschnitt (91) ist in Bezug auf die Fahrzeug-Rück-und-Vorwärts-Richtung hinter dem linken Blinker (75) angeordnet,
der linke Aussparungs-Abschnitt (91) überlappt den linken Blinker (75), wenn in der Fahrzeug-Front-Ansicht gesehen,
die rechte Griff-Abdeckung (36) einen nach hinten ausgesparten rechten Aussparungs-Abschnitt (92) beinhaltet, der rechte Aussparungs-Abschnitt (92) ist in Bezug auf die Fahrzeug-Rück-und-Vorwärts-Richtung hinter dem rechten Blinker (76) angeordnet, und
der rechte Aussparungs-Abschnitt (92) überlappt den rechten Blinker (76), wenn in der Fahrzeug-Front-Ansicht gesehen.

9. Das Spreiz-Sitz-Fahrzeug (1) gemäß einem der Ansprüche 1 bis 8, wobei der linke seitliche Abschnitt des vorstehenden Abdeckungs-Abschnitts (45) einen linken Befestigungs-Abschnitt (451) enthält, der linke Befestigungs-Abschnitt (451) enthält ein linkes Loch (452), das in Bezug auf die Fahrzeug-Breiten-Richtung nach links geöffnet ist,
der linke Blinker (75) ist am linken Befestigungs-Abschnitt (451) angebracht,
der linke Blinker-Kabelbaum (93) ist durch das linke Loch (452) eingesetzt,
der rechte seitliche Abschnitt des vorstehenden Abdeckungs-Abschnitts (45) einen rechten Befestigungs-Abschnitt (453) enthält, der rechte Befestigungs-Abschnitt (453) enthält ein rechtes Loch (454), das in Bezug auf die Fahrzeug-Breiten-Richtung nach rechts geöffnet ist,
der rechte Blinker (76) ist am rechten Befestigungs-Abschnitt (453) angebracht, und der rechte Blinker-Kabelbaum (94) ist durch das rechte Loch (454) eingesetzt.

10. Das Spreiz-Sitz-Fahrzeug (1) gemäß einem der Ansprüche 1 bis 9, wobei der linke Blinker-Kabelbaum (93) einen ersten Abschnitt (931) beinhaltet, der erste Abschnitt (931) erstreckt sich von dem linken Blinker (75) in Fahrzeug-Breiten-Richtung, der erste Abschnitt (931) ist innerhalb des Griff-Abdeckungs-Elements (26) angeordnet, das rechte Blinker-Kabelbaum (94) einen zweiten Abschnitt (941) beinhaltet, der zweite Abschnitt (941) erstreckt sich von dem rechten Blinker (76) in Fahrzeug-Breiten-Richtung, der zweite Abschnitt (941) ist innerhalb des Griff-Abdeckungs-Elements (26) angeordnet, und
die ersten und zweiten Abschnitte (931, 941) sind in Bezug auf die Fahrzeug-Rück-und-Vorwärts-Richtung vor dem Griff-Element (17) angeordnet.

11. Das Spreiz-Sitz-Fahrzeug (1) gemäß einem der Ansprüche 1 bis 10, wobei das Spreiz-Sitz-Fahrzeug (1) ein Fahrzeug vom Roller-Typ ist.

## Revendications

1. Véhicule à enfourcher (1) comprenant :
un châssis de carrosserie de véhicule (2) comprenant un tube de tête (11), le tube de tête (11) est disposé au centre du véhicule à enfourcher (1) dans un sens de la largeur du véhicule ;
un dispositif de direction (3) comprenant une fourche avant (16), une roue avant (4) et un élément de maniement (17), la fourche avant (16) est supportée par le tube de tête (11) de manière à pouvoir être tournée, la roue avant (4) est supportée par la fourche avant (16), l'élément de maniement (17) s'étend dans le sens de la largeur du véhicule, l'élément de maniement (17) peut être manœuvré par un pilote de manière à tourner la roue avant (4) ;
un élément couvre-guidon (26) disposé derrière et devant l'élément de maniement (17) par rapport à une direction arrière-avant du véhicule, l'élément couvre-guidon (26) s'étend dans le sens de la largeur du véhicule, l'élément couvre-guidon (26) peut être tourné en même temps que le dispositif de direction (3) ;
un dispositif de freinage gauche (56) fixé sur une partie latérale gauche de l'élément de maniement (17) par rapport au sens de la largeur du véhicule, le dispositif de freinage gauche (56) est disposé au moins en partie à l'intérieur de l'élément couvre-guidon (26) ;
un dispositif de freinage droit (57) fixé sur une partie latérale droite de l'élément de maniement (17) par rapport au sens de la largeur du véhicule, le dispositif de freinage droit (57) est disposé au moins en partie à l'intérieur de l'élément couvre-guidon (26) ;
un clignotant gauche (75) fixé sur l'élément couvre-guidon (26), le clignotant gauche (75) comprend une source lumineuse gauche (77) et un cabochon de clignotant gauche (78), le cabochon de clignotant gauche (78) est transparent, le clignotant gauche (75) est disposé devant la source lumineuse gauche (77) par rapport à la direction arrière-avant du véhicule ;
un faisceau de câbles de clignotant gauche (93) destiné à l'alimentation électrique du clignotant gauche (75), le faisceau de câbles de clignotant gauche (93) est disposé au moins en partie à l'intérieur de l'élément couvre-guidon (26) ;
un clignotant droit (76) fixé sur l'élément couvre-guidon (26), le clignotant droit (76) comprend une source lumineuse droite (83) et un cabochon de clignotant droit (84), le cabochon de clignotant droit (84) est transparent, le cabochon de clignotant droit (84) est disposé devant la source lumineuse droite (83) par rapport à la direction arrière-avant du véhicule ;
un faisceau de câbles de clignotant droit (94) destiné à l'alimentation électrique du clignotant droit (76), le faisceau de câbles de clignotant droit (94) est disposé au moins en partie à l'intérieur de l'élément couvre-guidon (26) ;
un capot avant (23) fixé sur le châssis de carrosserie de véhicule (2), le capot avant (23) est disposé devant le tube de tête (11) par rapport à la direction arrière-avant du véhicule et sous l'élément couvre-guidon (26) par rapport à une direction haut-bas du véhicule ; et
un phare (29), l'élément de maniement (17) et le dispositif de freinage gauche sont tous les deux disposés en partie à l'intérieur d'un couvre-guidon gauche, l'élément de maniement (17) et le dispositif de freinage droit sont tous les deux disposés en partie à l'intérieur d'un couvre-guidon droit ;
**caractérisé en ce que** le phare (29) est disposé dans le capot avant,
l'élément couvre-guidon (26) comprend
un couvre-guidon central (34) disposé au centre du véhicule à enfourcher (1) dans le sens de la largeur du véhicule,
le couvre-guidon gauche (35) s'étendant latéralement vers la gauche depuis le guidon central (34) par rapport au sens de la largeur du véhicule, et
le couvre-guidon droit (36) s'étendant latéralement vers la droite depuis le couvre-guidon central (34) par rapport au sens de la largeur du véhicule,
le phare (29) est disposé sous un bord supérieur du capot avant (23) par rapport au sens haut-bas du véhicule,
les clignotants droit et gauche (76, 75) couvrent une partie d'extrémité supérieure du capot avant (23), en vue de dessus du véhicule,
l'élément de maniement (17) et le dispositif de freinage gauche (56) sont tous les deux disposés en partie à l'intérieur du couvre-guidon gauche (35),
l'élément de maniement (17) et le dispositif de freinage droit (57) sont tous les deux disposés en partie à l'intérieur du couvre-guidon droit (36),
le couvre-guidon central (34) comprend une partie de couverture saillante (45), la partie de couverture saillante (45) avance plus loin vers l'avant que le couvre-guidon gauche (35) et le couvre-guidon droit (36) par rapport à la direction arrière-avant du véhicule,
par rapport à la direction haut-bas du véhicule, le couvre-guidon gauche (35) n'est pas situé directement en dessous d'une zone entre une extrémité arrière du clignotant gauche (75) et une extrémité avant du clignotant gauche (75) dans la direction arrière-avant du véhicule,
le clignotant gauche (75) est fixé sur une partie latérale gauche de la partie de couverture saillante (45),
le clignotant gauche (75) s'étend latéralement vers la gauche depuis la partie latérale gauche de la partie de couverture saillante (45) par rapport au sens de la largeur du véhicule,
le faisceau de câbles de clignotant gauche (93) est connecté au clignotant gauche (75) en passant à travers la partie latérale gauche de la partie de couverture saillante (45),
par rapport à la direction haut-bas du véhicule, le couvre-guidon droit (36) n'est pas situé directement en dessous d'une zone entre une extrémité arrière du clignotant droit (76) et une extrémité avant du clignotant droit (76) dans la direction arrière-avant du véhicule,
le clignotant droit (76) est fixé sur une partie latérale droite de la partie de couverture saillante (45),
le clignotant droit (76) s'étend latéralement vers la droite depuis la partie latérale droite de la partie de couverture saillante (45) par rapport au sens de la largeur du véhicule, et
le faisceau de câbles de clignotant droit (94) est connecté au clignotant droit (76) en passant à travers la partie latérale droite de la partie de couverture saillante (45).

2. Véhicule à enfourcher (1) selon la revendication 1, dans lequel une extrémité extérieure du clignotant droit (76) et une extrémité extérieure du clignotant gauche (75) sont situées à l'intérieur des extrémités extérieures droite et gauche du capot avant (23) dans le sens de la largeur du véhicule.

3. Véhicule à enfourcher (1) selon la revendication 1 ou 2, dans lequel
une extrémité avant du clignotant gauche (75) est située en avant d'un bord avant (351) du couvre-guidon gauche (35) par rapport à la direction arrière-avant du véhicule, et
une extrémité avant du clignotant droit (76) est située en avant d'un bord avant (361) du couvre-guidon droit (36) par rapport à la direction arrière-avant du véhicule.

4. Véhicule à enfourcher (1) selon l'une quelconque des revendications 1 à 3, dans lequel le clignotant gauche (75) et le clignotant droit (76) couvrent tous les deux au moins en partie l'élément couvre-guidon (26), en vue avant du véhicule.

5. Véhicule à enfourcher (1) selon l'une quelconque des revendications 1 à 4, dans lequel le clignotant gauche (75) et le clignotant droit (76) couvrent tous les deux totalement l'élément couvre-guidon (26), en vue avant du véhicule.

6. Véhicule à enfourcher (1) selon la revendication 3, dans lequel
le bord avant (351) du couvre-guidon gauche (35) est situé en avant de l'extrémité arrière du clignotant gauche (75) par rapport à la direction arrière-avant du véhicule, et
le bord avant (361) du couvre-guidon droit (36) est situé en avant de l'extrémité arrière du clignotant droit (76) par rapport à la direction arrière-avant du véhicule.

7. Véhicule à enfourcher (1) selon l'une quelconque des revendications 1 à 6, dans lequel
le cabochon de clignotant gauche (78) est disposé loin vers l'avant par rapport au couvre-guidon gauche (35) par rapport à la direction arrière-avant du véhicule, et
le cabochon de clignotant droit (84) est disposé loin vers l'avant par rapport au couvre-guidon droit (36) par rapport à la direction arrière-avant du véhicule.

8. Véhicule à enfourcher (1) selon l'une quelconque des revendications 1 à 7, dans lequel
le couvre-guidon gauche (35) comprend une partie creuse gauche (91) rentrant vers l'arrière, la partie creuse gauche (91) est située derrière le clignotant gauche (75) par rapport à la direction arrière-avant du véhicule,
la partie creuse gauche (91) couvre le clignotant gauche (75), en vue avant du véhicule,
le couvre-guidon droit (36) comprend une partie creuse droite (92) rentrant vers l'arrière, la partie creuse droite (92) est située derrière le clignotant droit (76) par rapport à la direction arrière-avant du véhicule, et
la partie creuse droite (92) couvre le clignotant droit (76), en vue avant du véhicule.

9. Véhicule à enfourcher (1) selon l'une quelconque des revendications 1 à 8, dans lequel
la partie latérale gauche de la partie de couverture saillante (45) comprend une partie de fixation gauche (451), la partie de fixation gauche (451) comporte un trou gauche (452) ouvert vers la gauche par rapport au sens de la largeur du véhicule,
le clignotant gauche (75) est fixé sur la partie de fixation gauche (451),
le faisceau de câbles de clignotant gauche (93) est inséré à travers le trou gauche (452),
la partie latérale droite de la partie de couverture saillante (45) comprend une partie de fixation droite (453), la partie de fixation droite (453) comporte un trou droit (454) ouvert vers la droite par rapport au sens de la largeur du véhicule,
le clignotant droit (76) est fixé sur la partie de fixation droite (453), et
le faisceau de câbles de clignotant droit (94) est inséré à travers le trou droit (454).

10. Véhicule à enfourcher (1) selon l'une quelconque des revendications 1 à 9, dans lequel
le faisceau de câbles de clignotant gauche (93) comprend une première partie (931), la première partie (931) s'étend à partir du clignotant gauche (75) dans le sens de la largeur du véhicule, la première partie (931) est située à l'intérieur de l'élément couvre-guidon (26),
le faisceau de câbles de clignotant droit (94) comprend une seconde partie (941), la seconde partie (941) s'étend à partir du clignotant droit (76) dans le sens de la largeur du véhicule, la seconde partie (941) est située à l'intérieur de l'élément couvre-guidon (26), et
les première et seconde parties (931, 941) sont situées en avant de l'élément de maniement (17) par rapport à la direction arrière-avant du véhicule.

11. Véhicule à enfourcher (1) selon l'une quelconque des revendications 1 à 10, le véhicule à enfourcher (1) étant un véhicule de type scooter.
